Europäisches Patentamt

European Patent Office

Office européen des brevets

(19)

(11) Veröffentlichungsnummer: **0 329 158 B1**

(12) **EUROPÄISCHE PATENTSCHRIFT**

(45) Veröffentlichungstag der Patentschrift: **22.06.94**

(51) Int. Cl.⁵: **H04L 25/48**, H04L 27/00

(21) Anmeldenummer: **89102762.5**

(22) Anmeldetag: **17.02.89**

(54) **Verfahren für die digitale und/oder analoge Codierung von Information eines, zweier oder mehrerer Kanäle und/oder Frequenz- oder Bandbreitenreduzierung und/oder Erhöhung der Übertragungssicherheit.**

(30) Priorität: **19.02.88 DE 3805263**
**17.05.88 DE 3816735**
**18.08.88 DE 3828115**
**12.09.88 DE 3831054**
**19.10.88 DE 3835630**

(43) Veröffentlichungstag der Anmeldung:
**23.08.89 Patentblatt 89/34**

(45) Bekanntmachung des Hinweises auf die
Patenterteilung:
**22.06.94 Patentblatt 94/25**

(84) Benannte Vertragsstaaten:
**AT BE CH DE ES FR GB GR IT LI NL SE**

(56) Entgegenhaltungen:
EP-A- 0 284 019
DE-A- 3 802 088
FR-A- 2 015 695
US-A- 4 066 841
US-A- 4 345 323

Patent Abstracts of Japan, Band 10, Nr. 337
(E-454)(2393), 14. November 1986 & JP-A-61
141 230

(73) Patentinhaber: **Dirr, Josef**
**Neufahrner Strasse 5**
**D-81679 München(DE)**

(72) Erfinder: **Dirr, Josef**
**Neufahrner Strasse 5**
**D-81679 München(DE)**

## Beschreibung

Die vorliegende Erfindung befasst sich mit einem Verfahren zur Codierung von Information, insbesondere für Zwecke der Zusammenfasssung mehrerer Kanäle oder Kompression von Information, wie z.B. aus der Patentschrift US-A-4 345 323 bekannt.

Für die Übertragung von Information mehrerer Kanäle über einen Weg sind bisher frequenz- und zeitmultiplexe Verfahren wie z.B. die Trägerfrequenztechnik und die Pulscodemodulation, insbesondere in Verbindung mit der Pulsamplitudenmodulation bekannt. Weiterhin ist auch eine Methode zur Mehrkanalausnützung digitaler Daten bekannt, indem die binären Daten parallel geordnet und auf der Basis der Pulsdauermodulation zu einem Codewort zusammengefügt werden. Auch ist eine Methode bekannt, bei der die Information in Pulsdauern und in der Folge über einen Rechtecksignalgenerator und Filter in eine sinusähnliche Wellenform umgewandelt wird.

Alle diese bekannten Verfahren haben den Nachteil, dass sie im Vergleich zur zu übertragenden Informationsmenge eine grosse Bandbreite benötigen. Dasselbe gilt auch bei den Verfahren für die Kompression von Information.

Aufgabe der vorliegenden Erfindung ist es nun,die Information eines oder mehrerer Kanäle mit weniger Bandbreite als bei den bekannten Verfahren zu übertragen, wobei auch eine grosse Übertragungssicherheit gewährleistet sein soll. Dies wird insbesondere dadurch erreicht, indem man die Codierung in die Halb- bezw. Periodendauern, d.h. in die Phase ggf. in Verbindung mit einer digitalen Amplitudencodierung legt, oder indem man eine digitale Amplitudencodierung in Codierwechselströme solcher Frequenz legt, dass der folgende höherfrequente Codierwechselstrom um die halbe Frequenz oder ein Vielfaches davon höher liegt. Jeder Codierwechselstrom kann dabei ggf. öfters zur Codierung vorgesehen werden, wenn dieser auf der Basis der Quadraturmodulation bezw. doppelter Quadraturamplitudenmodulation erzeugt wird und addiert werden. Auf diese Weise kann ein Vielfaches an Information codiert werden.

Die Erfindung kann z.B. angewendet werden zum Zusammenfassen von Telex, Teletex, Telefax, digitalen Fernsprech- Datenkanälen. Auch bei Gemeinschaftsanschlüssen und Wählsternschaltern kann die Erfindung vorteilhaft eingesetzt werden.

Weiterhin zeigt die Erfindung Möglichkeiten von vorteilhaften Codierungen neuer Fernsehtechniken zur Verbesserung von C-MAC D-MAC, D2-MAC usw. Weiterhin kann sie auch eingesetzt werden bei der Weiterentwicklung des HDTV-Verfahrens. Alle diese neuen Fernsehverfahren sind durch einen Bandbreiten mangel in ihren Möglichkeiten sehr eingeengt.

Nachstehend wird die Erfindung an Hand von Zeichnungen näher erläutert. Diese stellen dar:

Fig.1
Prinzip einer codemultiplexen Anordnung
Fig.2
Bisherige Erezeugung von Phasensprüngen z.B. bei der 4 PSK
Fig.3 bis 8
Erzeugung von Phasensprüngen
Fig.9
Erzeugung von Amplitudenstufen
Fig.10,11 und 13
Darstellung einer doppelten QAM und Vektordiagramm einer höherwertigen Codierung
Fig.14
Vektordiagramm einer doppelten QAM
Fig.16
Anordnung der Codierpunkte bei einer mehrwertigen Codierung mittels Amplitudengrössen und Phasenlage
Fig.15
Übersicht für die Erzeugungvon Phasen-und Amplitudenstufen
Fig.17
Erezeugung von Phasensprüngen
Fig.18,19,20,21,24,28
Codemultiplexe Beispiele
Fig.22,23
Übersicht eines Fernsehsenders und Empfängers
Fig.25,26,27
Duplexverkehr über Leitungen und Funk mit nur einem Wechselstrom mit Phasennachstellung
Fig.29
Kompensierung von Überlappungen
Fig.30,31,32
Erzeugung und Umsetzung von PDM-Impulsen in Halbperiodenimpulse
Fig. 33 bis 38
Erzeugung und Umsetzung von PDM- Impulse in einen Wechselstrom
Fig.39 bis 44
Codierungen gemäss der Erfindung für das Fernsehen
Fig. 45,46,62,63
Doppelbinäre und Doppelduobinäre Anordnung von Codeelementen
Fig.47,48,49
Schaltungsübersichten für das Fernsehen
Fig. 50 bis 55
Codierungen von Farbfernsehsignalen
Fig.56,57,58
Mehrfachausnützung von Übertragungswegen PDM-codierter Signale
Fig.59,60
Auswertung von phasenmodulierten Signalen
Fig.64

Schaubild über Abhängigkeit der frequenzmodulierten Schwingung von der Amplitude und Frequenz der Modulationsschwingung

Eine einfache Art Phasensprünge zu realisieren ist in den Fig.3,4,5,6 und 7 beschrieben.Zuerst wird an Hand der Fig.3 dies näher erläutert. Auf der Sendeseite S werden Rechteckimpulse mit einer Frequenz von 1 MHz angeschaltet. Wird, wie in der Fig. 3c dargestellt, in den Übertragungsweg ein Tiefpass TP 5,5 MHz eingeschaltet, erhält man beim Empfänger E beinahe noch einen Rechteckimpuls . Wird,wie in der Fig 3b eingezeichnet, ein Tiefpass TP von 3.5 MHz eingeschaltet, ist die senkrechte Flankensteilhelt nicht mehr vorhanden, wird dagegen wie in der Fig 3a dargestellt, der Tiefpass auf 1,5 MHz reduziert, so erhält man beim Empfänger E einen sinusähnlichen Wechselstrom mit der Periodendauer der Rechteckperiode. Da sich also die Periodendauer gegenüber dem Rechteckimpuls nicht ändert, kann man durch Veränderung der Periodendauern der Rechteckimpulse auch die Phase bezw. Frequenz des in der Fig 3a dargestellten sinusförmigen Wechselstromes ändern. Da eine solche Änderung immer beim Nulldurchgang erfolgt,erfolgt eine kontinuierliche Änderung und werden kaum Oberwellen erzeugt, d.h. die Übertragung ist schmalbandiger als bei den bisher üblichen Phasentastungen. In der Empfangsstelle kann dann auch die Änderung der Periodendauer als Mass für den Phasensprung vorgesehen werden. Eine solche Ausverteschaltung wird noch später beschrieben.

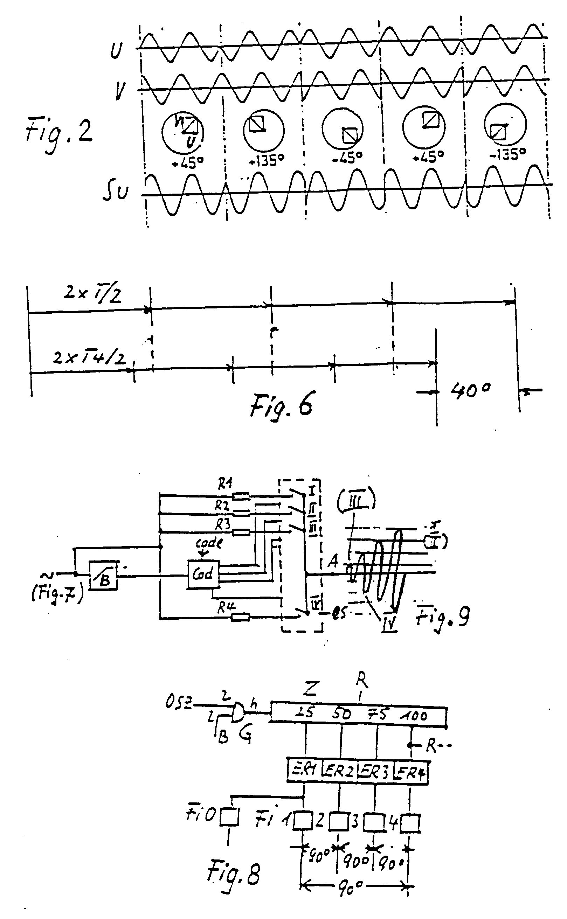

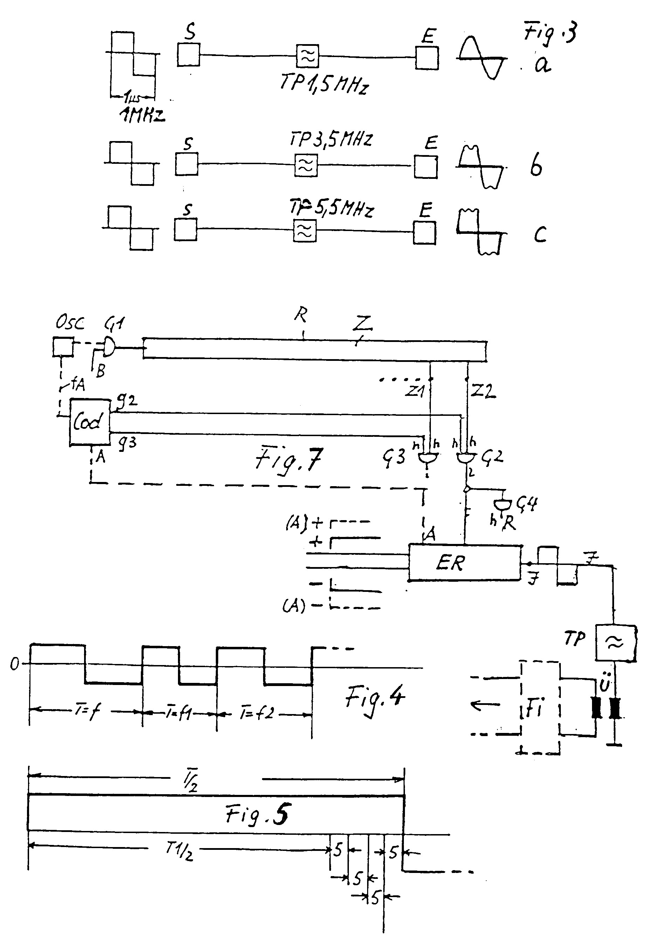

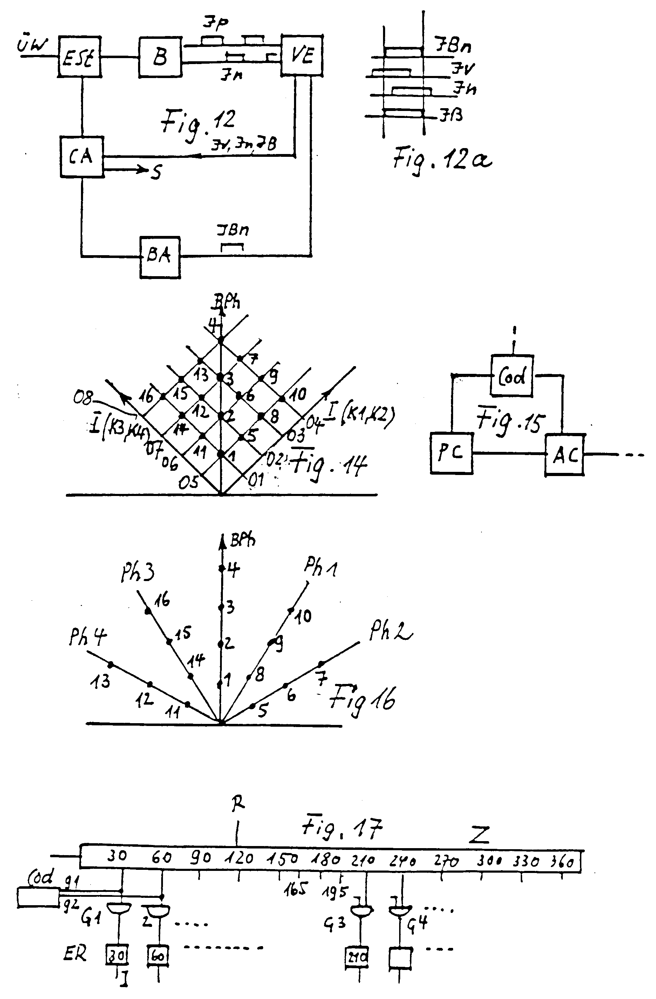

In der Fig 4 sind Rechteckimpulse mit verschiedenen Periodendauern T = f, T = f1 und T = f2 dargestellt. Nach einer analogen Anordnung nach der Fig 3a würde man auf der Empfangsseite einen sinusförmigen Wechselstrom mit den Periodendauern T = 1/f,T = 1/f1  T = 1/f2 erhalten. Da bei Phasensprüngen sich die Frequenz des Wechselstromes sich verkleinert oder vergrössert, entspricht die Frequenzänderung einem Phasensprung. Aus der Fig.2, die eine Phasentastung herkömlicher Art darstellt, geht dies deutlich hervor. Man sieht in dieser, dass bei jeder Phasenänderung eine Frequenzänderung erfolgt, jedoch nicht in kontinuierlicher Weise. Daher ist es auch schwer aus der Periodendauer auf der Empfangsseite die Grösse des Phasensprungs zu ermitteln.

Um die Frequenzänderungen und damit auch das Frequenzband klein zu halten, kann man jeden Phasensprung in Stufen zerlegen. In der Fig 5 ist schematisch dies aufgezeichnet. In dieser ist T/2 die Halbperiodendauer eines Impulses und entspricht 180 Grad.

Dieser Winkel wird in 36 Stufen zu je 5 Grad eingeteilt. Soll ein Phasensprung von 40 Grad zustandekommen, so wird die Halbperiode T/2 4 mal um 5 Grad gekürzt und natürlich die andere Halbperiode ebenfalls . Die Halbperiodendauer gegenüber dem Bezugsimpuls ist dann T1/2. Nach dem Phasensprung kann man entweder diese Frequenz belassen, oder aber wieder auf die Frequenz T/2 umschalten, indem man einen Phasensprung von 5 Grad in entgegengesetzter Richtung vorsieht. Gegenüber der Bezugsphase wäre dann immer noch eine Phasenverschiebung von 30 Grad vorhanden.

In der Fig.6 sind zeitlich 4 mal die Perioden der Bezugsphase und 4 mal die Perioden der um 2x5 Grad gekürzten Perioden eingezeichnet. Beim Vergleich nach der 4. Periode ist der Unterschied von 40 Grad gegenüber der Bezugsphase ersichtlich.

In der Fig 7 ist eine Schaltung einer Ausführungsform der Erfindung dargestellt. Es wird angenommen die Periodendauer in 72 Stufen zu unterteilen und zwar mit Phasensprungstufen von 5 Grad. Jeder Stufe sollen 10 Messimpulse zugeordnet werden, so sind für die Periodendauer 72x10 = 720 Messimpulse und für die Halbperiodendauer 360 Messimpulse erforderlich. Auf der Sendeseite brauchen immer nur die Halbperioden codiert werden. Die 2. Halbperiode wird dann jeweils über den Codierer Cod gesteuert. Werden Phasensprungstufen von 5 Grad vorgesehen, so sind für die Halbperiode, wenn die Änderung voreilend sein soll, 350 und bei einer nacheilenden Phasenänderung 370 Messimpulse erforderlich. Das Zählglied Z in der Fig.7 muss also mindestens 370 Ausgänge haben. Die Messimpulsfrequenz hängt also von der Codierfrequenz ab. Im Beispiel der Fig 7 wird im Oszillator Osc der Steuerwechselstrom für die Messimpulse erzeugt. Man kann damit unmittelbar über das Gatter G1 das Zählglied steuern, oder aber auch Pulse mittels eines Schmitt-Triggers oder einer anderen Schaltung erzeugen und mit diesen Pulsen dann das Zählglied Z schalten. Man kann auch durch Veränderung der Oszillatorfrequenz die Impulsdauer ändern. Angenommen wird der Ausgang Z2 am Zählglied Z markiert 370 Messimpulse, also die nacheilende Phasenverschiebung, dann wird vom Codierer Cod über g2 ein solches Potential an den einen Eingang des Gatters G2 gelegt, dass dann beim Erreichen des Zählgliedes Ausgang Z2, über das dann z.B. dasselbe Potential an den anderen Eingang von G2 gelegt wird, dass sich das Potential am Ausgang von G2 ändert , z.B. von h auf l. Im elektronischen Relais ER hat dies zur Folge, das Pluspotential + an den Ausgang J gelegt wird. Über die Verbindung A ist der Codierer Cod mit dem elektronischen Relais Er verbunden. Beim nächsten Überlauf des Zählgliedes Z bis Z2 wird über die Verbindung A ER so gesteuert, dass an den Ausgang J minus Potential - angelegt wird. Am Ausgang von ER können also bipolare Rechteckimpulse abgenommen werden. Man könnte genau so unipolare Rechteckimpulse erzeugen. Dieser Vorgang wiederholt sich,solange vom Codierer Cod Potential an G2 angelegt wird. Sind z.B. 5 Phasonstufen für einen Phasensprung vorgesehen, so wird das Zählglied Z 10mal bis Z2 geschaltet. Beim Ausgang Z2 erfolgt die Rückschaltung des Zählgliedes über das Gatter G4, R. Es können also durch eine verschieden grosse Zahl von Ausgängen am Zählglied Z und/oder durch Veränderung der Oszillatorfrequenz die Impulsdauer, die Stufenzahl und die Grösse der Stufen eingestellt werden. Die Steuerung dieser Varianten erfolgt über den Codierer Cod. Über fA kann eine Umschaltung der Oszillatorfrequenz, über die Anschlüsse g2,g3,... der Stufenzahl und ggf. der Phasenwinkeländerung und der Stufengrösse und über A die Amplituden der Rechteckimpulse J erfolgen. Im Beispiel sind 2 Grössen +/(A)+, -/(A)- vorgesehen. Die Rechteckimpulse J werden dann an einen Tiefpass analog der Fig 3 geschaltet und über einen Übertrager Ü z.B. auf den Übertragungsweg ggf. unter Zwischenschaltung eines Filters Fi, gegeben.

Am Gatter G1 muss über B noch Beginnpotential angelegt werden damit die Oszillatorpulse zur Wirkung kommen. Mit dieser Anordnung sind also folgende Codierungen möglich: eine voreilende, eine nacheilende , keine Phasenverschiebung. Diese können dabei auch stufenweise erfolgen. Die Phasendifferenz oder die Bezugsphase kann verwendet werden. Zusätzlich kann eine Amplitudencodierung ggf. stufenweise vorgesehen werden. Eine weitere Möglichkeit besteht darin die Codierung beim positiven oder negativen Impuls bezw. Halbwelle vorzunehmen. Auch die Zahl der Rechteckimpulse ist ein weiteres Codemittel.

Man kann auch eine Harmonische der Rechteckimpulse aussieben.

Erfolgt dies z.B. bei der 3. Harmonischen,so sind 3 Perioden in einem plus/minus-Impuls enthalten. In diesen 3 Periodendauern sind dann auch, wenn die Impulsdauer verändert wird, die Phasenverschiebungen enthalten.

In den verschiedensten Schaltungen , wie z.B. bei der Quadraturamplitudenmodulation (QAM) werden um 90 Grad gegeneinander phasenverschobene Wechselströme benötigt. In der Fig.8 ist ein Schaltungsprinzip zur Erzeugung solcher phasenverschobener Wechselströme gleicher Frequenz dargestellt. Analog der Fig.7 wird das Zählglied Z durch einen Wechselstrom, der im Oszillator Osz erzeugt wird und über das Gatter G , an dessen anderen Eingang ein Beginnpotential B liegt,geführt wird, gesteuert. Im Beispiel sollen 4 Rechteckimpulse erzeugt werden, die gegeneinander um 90 Grad phasenverschoben sind.Hat das Zählglied Z 100 Ausgänge , so sind beim 25.,50.,75. und 100. Ausgang elektronische Relais ER1 bis ER4 analog dem ER-Relais in der Fig. 7 anzuschalten.Mit diesen elektronischen Relais werden dann wie bereits in der Fig. 7 beschrieben, Rechteckimpulse erzeugt. Hier sind in den ER-Relais noch Mittel, die bei bipolaren Rechteckimpulsen immer eine Potentialumkehr vornehmen und bei unipolaren Rechteckimpulsen das Potential während eines Durchlaufs wegnehmen.Die Rechteckimpulse werden dann, in der Fig. 7 mit J bezeichnet, über die Filter Fi1 bis Fi4 gesendet. Der dann entstehende Wechselstrom hat jeweils 90 Grad Phasenverschiebung gegenüber dem vom nächsten Ausgang erzeugten. An Stelle von phasenverschobenen Wechselströmen kann man durch die Ausgänge auch um 90 Grad phasenverschobene Abnahmen von z.B. PAM-Proben steuern.

Am elektronischen Relais ER1 ist noch ein Filter FiO angeordnet das z.B. nur die 3. Oberwelle des Rechteckimpulses durchläst, sodass man hier die 3-fache Frequenz der Rechteckimpulse erhält.

Die Phasenverschiebung wird dann auf die 3. Oberwelle übertragen.

Mit der Fig.7 kann man gleichzeitig auch verschiedene Amplitudenstufen erzeugen. In der Schaltung sind nur 2 gekennzeichnet.

In der Fig.9 ist eine weitere Möglichkeit verschiedene Amplitudenstufen zu erzeugen. Der z.B. in der Fig.7 erzeugte Wechselstrom wird einem Begrenzer zugeführt, in dem die Steuerimpulse erzeugt werden. Über den Anschluss Code werden die Kennzustände zugeführt, die eine Umschaltung auf die durch den Code bestimmten Amplitudengrösse vornehmen und zwar im Codierer Cod. Die Umschaltung auf eine andere Amplitudengrösse erfolgt immer beim Nulldurchgang . Die Grösse der Amplituden wird durch die Widerstände R1 bis R4 , die in Wechselstromkreisen angeordnet sind, bestimmt. Elektronische Relais I bis IVes, die durch den Codierer Cod gesteuert werden, schalten die verschiedenen Widerstände in den Wechselstromkreisen ein. Am Ausgang A erhält man dann 4 verschieden grosse Amplituden.

Es ist auch bekannt eine Information durch die Halbwellen bezw. Perioden eines Wechselstromes zu codieren, bei einem Binärcode sind dann die Kennzustände grosser und kleiner Amplitudenwert.

Werden 2 solcher Codierwechselströme gleicher Frequenz um 90 Grad phasenverschoben und addiert, so können diese mit einem Wechselstrom gleicher Frequenz übertragen werden. In der Fig. 10a,b sind die Kanäle K1 und K2, die durch die Perioden als Codeelemente codiert werden mit den Kennzuständen grosser Amplitudenwert =1 und kleiner Amplitudenwert=0. Wird einer gegen den anderen um 90 Grad phasenverschoben, so können sie addiert werden. In der Fig.11 ist ihr Vektordiagramm dargestellt. Der Kanal K1 hat den Vektor K1(u) und der Kanal K2 den Vektor k2 (v). Die beiden Kennzustände der beiden Wechselströme sind mit u1/uo und v1/vo bezeichnet. Werden nun beide addiert, so erhält man die 4 Summenvektoren I,IV und II,III. Man sieht, dass die Vektoren II und III nicht mehr auf der 45 Grad Linie liegen. Die Auswertung ist dadurch etwas schwieriger. Für die Auswertung der Binärsignale genügen 4 Möglichkeiten, die man alle auf die 45 Grad Linie legen kann, in der Fig. 11 mit (II) und (III) bezeichnet. In der Fig.13 sind die 4 Möglichkeiten dargestellt, 00,11,10,01. Sind alle 4 Möglichkeiten auf dem 45 Grad Vektor, wie in der Fig.11 dargestellt, so kann man diese durch 4 verschiedene grosse Amplituden codieren, d.h.mit einem sinusförmigen Wechselstrom. In der Fig.9 ist eine solche Möglichkeit dargestellt. Um binäre Signale von 2 Kanälen zu übertragen genügt also ein mehrwertiger quaternärer Code; wie z.B. die 4 PSK oder 4 QAM. Diese Codierungen sind auf eine Periode verteilt. In der Fig.9 sind die positive und negative Halbwelle gleich gross, es liegt dann bei der Übertragung eine Gleichstromfreiheit vor. Man kann die positive und negative Halbwelle als zusätzliches Kriterium ausnützen.

Man kann dann die 4 Amplitudenkennzustände verteilen , 2 auf die positive und 2 auf die negative Halbwelle. Diese können dieselbe Grösse haben, also z.B. in Fig.11,I + IV für die positive und negative Halbwelle. Damit dieser Codierwechselstrom immer über dem Störpegel liegt, muss der Codierwechselstrom immer eine bestimmte Grösse aufweisen, z.B. wie in Fig.11 (III). Die Amplitudengrösse IV wird man dann etwas vergrössern.

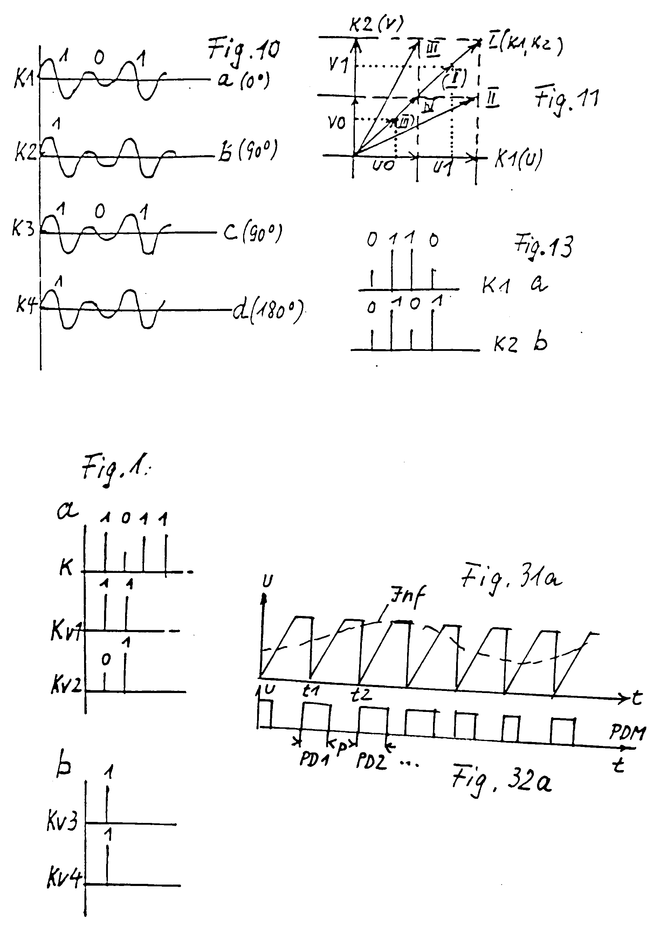

Eine Verkleinerung von z.B. binärcodierten Wechselströmen mit den Halbwellen bezw. Perioden als Codeelemente ist bereits bekannt. Voraussetzung hierfür sind Phasenverschiebungen der Probeantnahmen. Die vorliegende Erfindung zeigt eine weitere Möglichkeit auf,die Frequenz insbesonders binärcodierter Information zu verkleinern. In der Fig. 1 ist ein Kanal K mit einem Binärcode 1,0,1,1,..aufgezeichnet. Soll die Frequenz des Kanales verkleinert werden in 2 Kanäle mit der halben Frequenz, so müssen jeweils 2 seriell angeordnete Binärwerte des Kanales K parallel auf die Kanäle Kv1 und Kv2 verteilt werden, z.B. die 4 Werte 1,0,1,1 des Kanales K der Wert 1 aur Kv1, der Wert 0 auf Kv2, der Wert 1 wieder auf Kv1 und der weitere Wert 1 auf Kv2. Einen Wert kann man dabei immer speichern, oder man kann die Werte auch zeitlich versetzt übertragen. Bei der Auswertung muss dies berücksichtigt werden. Eine gleichzeitige Übertragung von 2 Kanälen wurde bereits schon in den Fig.11 und 13 dargelegt. Wie aus der Fig. 13 ersichtlich ist, sind 4 Kombinationen möglich.

In der Fig.10 sind 4 Codierwechselströme K1-K4 mit den Codeelementen Periode und den Kennzuständen grosser und kleiner Amplitudenwert gleicher Frequenz dargestellt. Will man alle 4 auf der Basis der QAM übertragen, müssen diese folgende Phasen aufweisen, K1 = OGrad, K2 = 90 Grad, K3 = 90 Grad und K4 = 180 Grad.

K1/K2 und K3/K4 werden zu einem Codierwechselstrom entsprechend der Fig.9 zusammengefasst und addiert. In der Fig.14 ist hierfür das Vektordiagramm dargestellt. Man sieht, dass 16 Kombinationen möglich sind. Weiterhin ist hieraus ersichtlich, dass nur 4 Werte auf dem 45 Grad vektor liegen. Bei der Auswertung müssen für die anderen Werte noch die voreilende bezw. nacheilende Phasenverschiebung berücksichtigt werden.

Die phasenverschobenen Wechselströme werden in einer Anordnung wie in der Fig.8 dargestellt, erzeugt und 2 Anordnungen nach der Fig.9 zugeführt, wobei diese Wechselströme gegeneinander um 90 Grad phasenverschoben sind.

Man kann auch einen Summenwechselstrom und einfachen Codierwechselstrom addieren, Voraussetzung ist eine 90 Grad Phasenverschiebung gegeneinander. Dabei entstehen 8 Kombinationsmöglichkeiten.

Auch 4 Kanäle können Codiermultiplex , wie in der Fig. 1 dargestellt, übertragen werden. Einmal sind 16 Kombinationen notwendig. Man kann hierfür auch bekannte Codierungen vorsehen, wie z.B. die 16 PSK, die 16 QAM die 8 PSK. Zur Codierung ist hier jeweils eine Periode erforderlich, wenn Phasenverschiebungen gemäss der vorliegenden Erfindung vorgesehen werden. An Stelle der doch eng zusammenliegenden Kennzustände bei der doppelten QAM nach Fig.14, kann man auch eine beliebige Codierung vornehmen. In Fig.16 wird die Codierung durch 30 Grad Phasenunterschiede und durch 3 und4 Amplitudenstufen vorgenommen. Falls man noch grössere Sicherheit haben will, kann man die 4 Amplitudenstufen BPh noch aufteilen. Auf der Nullinie können noch Stufen untergebracht werden. Man kann also jede Halbwelle für eine solche Codierung vorsehen. Will man jedoch eine Übertragung über drahtgebundene Übertragungswege vornehmen, ist es zweckmässig die negative Halbwelle mit derselben Codierung zu übertragen, damit man eine Gleichstromfreiheit hat. Mit derselben Methode kann man auch eine Verkleinerung vornehmen. In Fig.1 soll der Kanal nur mit der viertelchen Frequenz übertragen werden. Jeweils 4 seriell angeordnete Binärelemente 1 und 0 werden parallel wie in der Fig. 1 a,b vorgesehen, angeordnet. Die Werte 1,0, 1,1 des Kanales K werden dann parallel aufgeteilt auf den Kanal Kv1 "1", Kanal Kv2 "0", Kanal Kv3 "1" und Kanal Kv4 "1".

Im Codierer wird dann für die jeweilige Kombination der vorbestimmte Codierpunkt ermittelt und auf die Phase und Amplitude des Codierwechselstromes übertragen. Die Phase wird in der Fig.7 festgelegt, ggf. kann man mit dieser auch gleich die Amplitude codieren, und in der Fig.9 kann man dann die erforderlichen Amplituden codieren. In der Fig. 15 ist die Übersicht hierfür dargestellt. Im Codierer Cod erfolgt die Festlegung des Codierpunktes aufgrund der Viererkombination. Der Phasencodierer erzeugt die Halbwellen bezw. Perioden mit entsprecher Phase und der Amplitudencodierer erzeugt die dazugehörigen Amplituden. Ein Phasencodierer kann analog der Fig.7 und ein Amplitudencodierer analog der Fig.9 aussehen.

Ein Phasensprung bedeutet immer eine Änderung der Periodendauer. Diese Änderung, also Frequenzänderung, kann bei keiner weiteren Phasenänderung beibehalten werden, oder man kann bei der nächsten Periode bezw. Halbperiode wieder auf die ursprüngliche Frequenz umschalten. Da im letzteren Fall der Wechselstrom eine andere Phase aufweist, ist bei der Auswertung eine Bezugsphase erforderlich. Wie aus der Fig.4 hervorgeht kann mit Hilfe der Schaltung der Fig.7 jede beliebige Phase beibehalten, d.h. die Frequenz beibehalten werden, die bei der Phasenänderung entstanden ist. Die Phasenänderungen werden immer im vorliegenden Fall beim Nulldurchgang vorgenommen.

In der Fig.16 kann man eine Bezugsphase BPh vorsehen, von der aus vor- und nacheilend 2x 30 Grad eine Phasenverschiebung vorgenommen wird.

In der Fig. 17 ist eine Erzeugung der Phasensprünge der Fig. 16 nach dem Prinzip der Fig.7 dargestellt. Der Winkel von 360 Grad wird durch 3600 Pulse gekennzeichnet. Liegt nur eine Amplitudenänderung mit der Bezugsphase vor, so wird das Zählglied immer von 0 bis 360 Grad durchgeschaltet. Die Steuerung erfolgt dabei über den Codierer Cod, der bereits in der Fig.7 beschrieben wurde. Die Amplitudenänderung erfolgt dabei wie in der Fig.7 oder wie in der Fig.9 dargestellt. Soll der Phasensprung Ph1 in Fig.16 erfolgen, so muss, wenn eine Gleichstromfreiheit erforderlich ist, jede Halbperiode bis zum Ausgang 195 geschaltet werden. Eine Bezugsphase ist bei der Auswertung nicht notwendig, weil, solange keine weitere Phasenänderung erfolgt, durch die Periodendauer ja die eindeutige Phase festgelegt ist. Liegt die Codierung auf dem Vektor Ph3, so ist die Periodendauer 330 Grad, d.h. beim Ausgang 165 erfolgt immer eine Umschaltung . Die Phasenverschiebung ist hierbei immer auf die Periodendauer bezogen. Würde z.B. im letzten Fall die Phasenverschiebung auf die Halbperiode bezogen, so müsste jeweils eine Rückschaltung beim Ausgang 150 erfolgen. Andere Methoden der Erzeugung von Phasensprüngen können genau so verwendet werden.

Die Auswertung der Phasensprünge erfolgt in bekannterweise durch Abmessung der Periodendauern mittels einer überhöhten Steuergeschwindigkeit von Zählgliedern, z.B. in der europäischen Patentanmeldung 86104693.6 offenbart.

Bei der Auswertung der Fig. 14 ist eine Bezugsphase erforderlich. Die Amplitudenpunkte 1 bis 4 sind unmittelbar auf der Bezugsphasenlage, während die anderen 12 Codierpunkte voreilend und nacheilend zur Bezugsphase angeordnet sind. Es wird angenommen die Signale sind die eines Fernsehsystems.

In der Austastzeit wird dann die Bezugsphase ermittelt und zugleich Steuersignale übertragen. Dabei werden nur die Amplitudenwerte auf der Bezugsphase verwendet. Vom Übertragungsweg ÜW werden die Signale dem Eingangssatz EST zugeführt (Fig.12). Einmal gehen sie dann zu einem Begrenzer B und einmal zu einer C odeauswertung CA. Im Begrenzer werden die positiven und negativen Halbwellen zu Jp und Jn- Impulsen umgewandelt. In der Vergleichseinrichtung VE wird nun die Phase der von dem Übertragungsweg kommenden Impulse mit einem Bezugsphasenimpuls JBn vergliechen. In der Fig.12a sind die vornacheilenden und der Bezugsphasenimpuls Jv,Jn,JB dargestellt, die mit dem aus einer Codierung ermittelte Bezugsphasenimpuls JBn verglichen werden. Die 3 möglichen Phasenwerte vornacheilend oder Bezugsphase werden jeweils zur Codeauswertung gegeben. In dieser werden die Amplitudenwerte ermittelt und in Verbindung mit der vor-nacheilenden oder Bezugsphase werden dann die Codierungspunkte ermittelt und über S zur weiteren Verwertung weitergesendet. Die Codierung der Bezugsphase in der Austastzeit kann z.B. so aussehen, dass man 4 mal den Punkt 2 und 4 mal den Punkt 4 auf der Bezugsphase sendet. Die Auswertung derselben erfolgt in der Bezugsphasenauswertung BA. Von dieser wird dann ein Bezugsphasenimpuls JBn zur Vergleichseinrichtung gegeben.

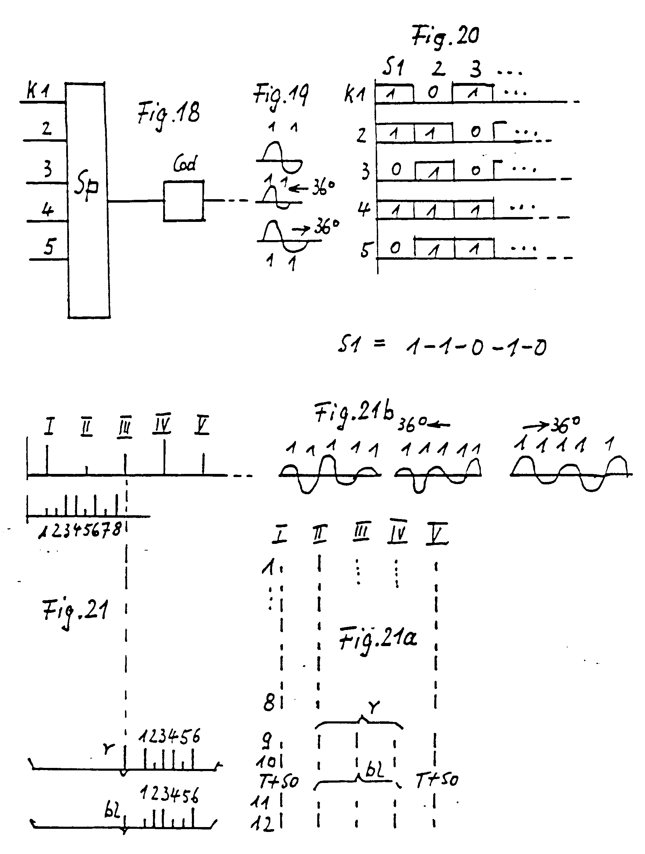

In der Fig.18 ist ein weiteres Ausführungsbeispiel der Erfindung dargestellt. Die 5 Kanäle K1 bis K5 sollen codemultiplex nur über einen Kanal bezw. Weg übertragen werden. Die z.B. binärcodierte Information dieser 5 Kanäle wird zuerst im Speicher Sp gespeichert. In der Fig.20 sind z.B. die Schritte der Binärzeichen dargestellt und zwar bereits synchronisiert. Zu codieron sind also jeweils 5 parallel angeordnete Schritte bezw. Impulse S1,2,3,... Die Schritte von S1 sind 1-1-0-1-0.

Für die Codierung dieser 32 Kombinationen sind 5 bit erforderlich. Im Beispiel werden diese mit den Amplituden der Halbwellen eines Wechselstromes mit den Kennzuständen grosser und kleiner Amplitudenwert und mit einem voreilenden und einem nacheilenden Phasensprung von 36 Grad codiert, wie in der Fig.19 gezeigt ist. Vom Speicher Sp der Fig.18 werden die Binärwerte dem Codierer Cod zugeführt und in diesem in einen entsprechenden Code umgewandelt. Im Decodierer der Empfangsseite werden entsprechend dem Code den 5 Kanälen die entsprechenden Schritte wieder zugeordnet.

In der Fig.21 ist eine weitere Anwendung der Erfindung für die Codierung und Übertragung der Signale beim Farbfernsehen dargestellt. Das Luminanzsignal wird mit 6 MHz abgegriffen. Dieses Prinzip ist bereits schon in der Offenlegungsschrift P 32 23 312 offenbart. Die Farben rot und blau sollen je mit 1,2 Mhz abgegriffen werden, d.h. auf 5 Luminanzabgriffe trifft je ein Rot-und Blauabgriff. Die Luminanzabgriffe sind mit I,II, III,IV,V bezeichnet. Diese Probeentnahmen werden mit 8 bit codiert, im Beispiel binärcodiert. Mit dem Abgriff III müssen dann auch die Abgriffe für rot und blau erfolgen. Die Probeentnahmen von rot und blau werden im Beispiel mit 6 bit binärcodiert. Während der Übertragung der 5 Luminanzprobeentnahmen wird auch gleichzeitig der Code für die Farbprobeentnahmen rot und blau gesendet. Mit dem Abgriff von rot und blau könnte man mit der Übertragung der Farbe und mit der Probeentnahme I des Luminanzsignales beginnen. Man kann auch alle 5 Luminanzprobeentnahmen und Farbsignalproben speichern und erst nach der 5. Probeentnahme mit der Übertragung aller Fernsehsignale beginnen. In der Fig.21a sind die binären Codes aller zu übertragenden Signale aufgezeichnet. Die 8 bit 1-8 der Luminanzprobeentnahmen sind jeweils parallel angeordnet. Seriell sind dann unter 9,10 digitale Ton- und sonstige Signale T + So , die 6 bits des Rotsignales und nochmals die Ton-und sonstigen Signale und unter 11,12 wieder die Ton-und sonstigen Signale und die 6 bits des Blausignals angeordnet. Zweckmässig ist es, wenn man die Luminanzproben I bis V beim Sender noch speichert und die Farbcodes für rot und blau mit den vorhergehenden Luminanzproben sendet, sodass dann beim Empfänger sich eine Speicherung der 5 Luminanzproben erübrigt. Es müssen dann lediglich die Rot- und Blauproben gespeichert werden. Die Ton-und sonstigen Signale müssen ebenfalls gespeichert werden und dann zeitgleich mit dem Bild dem Lautsprecher zugeführt werden. Diese Signale können natürlich auch in die Austastzeit gelegt werden. Im Beispiel sind also 12 bit für die Übertragung einer Luminanzprobe für die Ton-und sonstigen Signalproben und für die Farbprobeentnahmen erforderlich. In der Fig.21b ist ein Beispiel für die Codierung dieser 12 bists dargestellt. 5 Halb-Perioden eines Wechselstromes werden hierfür vorgesehen. Der Binärcode besteht dabei aus Codeelementen der Halbwellen mit den Kennzuständen grosser und kleiner Amplitudenwert. Zusätzlich wird noch eine voreilende und nacheilende Phasenverschiebung von 36 Grad vorgesehen, sodass man damit 12 bit erhält.

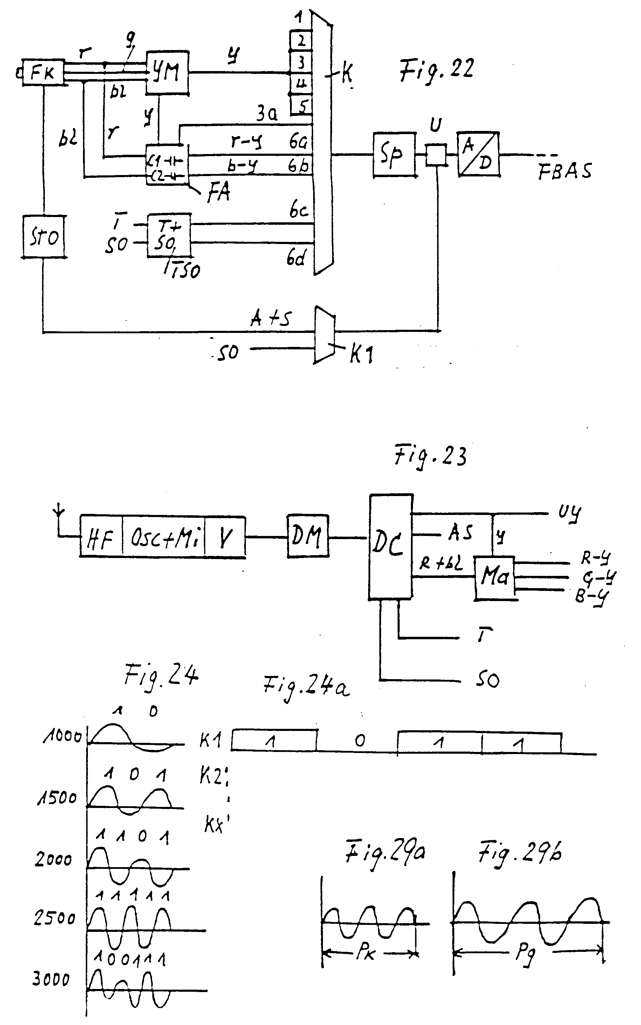

In der Fig.22 ist eine Übersicht eines solchen Fernsehsenders dargestellt. Das Steuerorgan StO steuert die Fernsehkamera FK liefert auch die übrigen Steuersignale wie Austast- und Synchonisiersignale A + S. Die Rot-Grün- und Blausignale werden einmal der Y-Matrix YM und rot und blau zugleich der Farbartaufbereitung FA zugeführt. Zugleich ist ein Konzentrator K vorgesehen, der das Luminanzsignal Y, die Farbsignale r + bl und die Ton- und sonstigen Signale abgreift. Beim Abgriff 3 wird über die Verbindung 3a ein Kriterium zur Farbartaufbereitung gegeben. In dieser wird ein Abgriff vom Rot-und Blausignal vorgenommen und beide Werte werden in den Kondensatoren C1 und C2 gespeichert. Der FA wird noch von der Y-Matrix ein Y-wert der beim 3. Abgriff vorhanden ist, zugeführt, sodass man am Abgriff 6a und 6b die Farbdifferenzsignale r-y und b-y erhält. - Man kann auch nur die Farbauszugssignale abgreifen.-Über den Baustein TSo werden die Ton- und sonstigen Signale analog über 6c und 6d dem Kouzentrator zugeführt. Vom Konzentrator aus werden alle Werte einem Speicher Sp zugeführt.

Vom Speicher aus werden die Signale zeitgerecht z.B. wie in Fig.21a beschrieben, einem Analog/Digitalwandler zugeführt.

In diesem erfolgt eine Codierung entsprechend der Fig.21b. Während der Austastzeit erfolgt eine Umschaltung auf den Konzentrator K1 über U. Als Auntastkriterium kann man z.B. einigemale das Codewort mit nur Nullen senden. - --- Auch können in der Austastzeit noch sonstige Signale So gesendet werden. Auch den Beginn einer Zeile kann man durch einen Nullcode markieren. Während der Zeile ist durch die Folge und der Zahl der Halbwellen eine Synchronisierung vorgegeben. Bei dem vorliegenden Code ist eine Nenn Frequenz von 15 MHz erforderlich.

Will man nur einen Amplitudencode verwenden, sind 2 Wechselströme mit je 18 MHz erforderlich, die man dann um 90 Grad phasenverschieben könnte und addiert übertragen könnte. Es ist lediglich eine Frage der Wirtschaftlichkeit und Sicherheit welche Methode hier verwendet wird. Der vor- oder nacheilende Phasensprung wird im Beispiel durch die Periodendauer festgelegt. Es ist also dann keine Bezugsphase erforderlich.

Natürlich können zur Verringerung der Frequenz mehrstufige Amplitudencodes oder/und Phasencodes verwendet werden. An den Eingang Ton T kann man z.B. das PAM-Signal anlagen,das dann innerhalb der 8 KHz-Zeit öfters abgegriffen wird. Es gibt hier zahlreiche Möglichkeiten den Abgriff 6c/6d auszunützen.

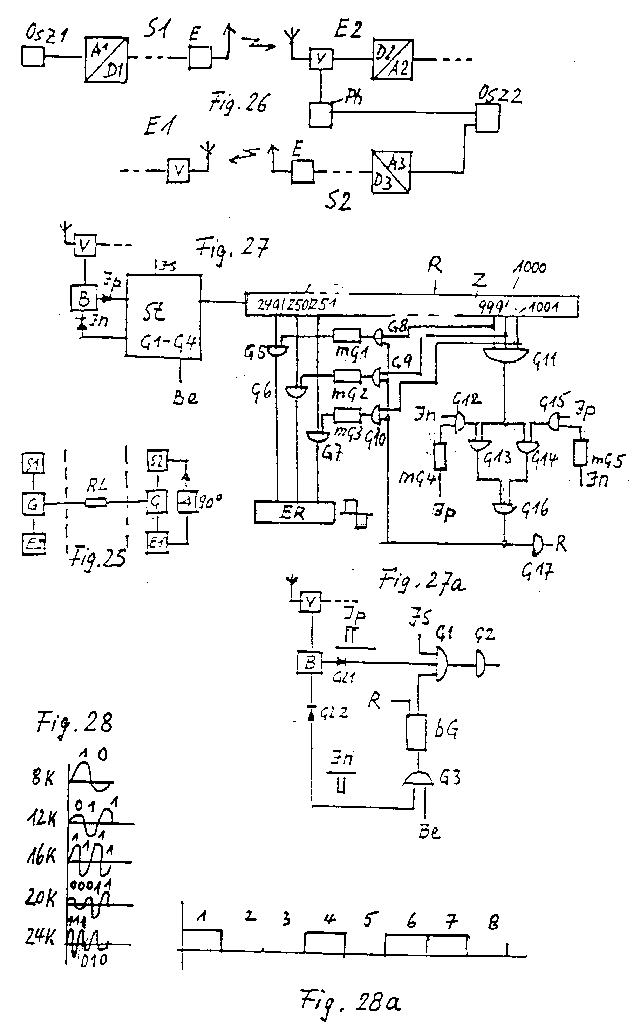

In der Fig.23 ist eine Teilübersicht eines Fernsehempfängers dargestellt. Über die HF- Oscillator und Mischstufe und dem Verstärker V werden die Signale dem Demodulator DM zugeführt.

In diesem werden z.B. die Signale wie sie in der Fig.21b dargestellt sind wieder gewonnen und dem Decodierer DC zugeführt.

Die Farbsignale werden in der Folge der Matrix Ma weitergegeben. An diese wird auch das Y-Signal geschaltet. Am Ausgang der Matrix erhält man dann z.B. die Farbdifferenzsignale R-Y, G-Y und B-Y, die wie UY an die Fernsehröhre geführt werden.Der Decoder DC liefert dann noch die Austast - und Synchronisiersignale AS, die Ton- und sonstigen Signale.

In der Fig.24 ist ein Beispiel dargestellt, bei dem der Code für den Codemultiplex aus mehreren Wechselströmen gewonnen wird. Es stellt einen Binärcode dar bei dem die Halbwellen der Wechselströme als Codeelemente dienen und bei dem ein grosser und ein kleiner Amplitudenwert die Kennzustände bilden. Die zu übertragenden Kennzeichen bestehen aus Rechteckimpulsen der Frequenz 1000 Hz, wie in der Fig.24a dargestellt ist.

Es sollen 20 Kanäle codemultiplex übertragen werden. Hierfür werden die Halbwellen der Wechselströme 1000, 1500, 2000, 2500 und 3000 Hz vorgesehen. Jedem Kanal kann man natürlich zeitmultiplex mehrere Kanäle niedrigerer Bitfrequenz zuführen. Dieselbe Bit-Zahl könnte man genau so mit 2 Wechselströmen mit 2000 Hz und nochmals 2 Wechselströmen mit 3000 Hz erreichen , wobei diese jeweils gegeneinander um 90 Grad phasenverschoben sein müssten, sodass sie bei der Übertragung addiert werden könnten. Wie am besten die Synchronisierung zwischen den einzelnen Kanälen hergestellt wird ist bereits bekannt (Unterrichtsblätter der DBP Heft4/6Jahr79 ), und es wird deshalb nicht weiter darauf eingegangen. Auf dieselbe Art kann man auch die digitalisierte Sprache bezw. mehrere Sprachkanäle gleichzeitig übertragen.

Bei einer Amplitudencodierung kann man mit demselben Wechselstrom Duplexbetrieb durchführen. Dazu ist es notwendig, dass der Gegencodierwechselstrom um 90 Grad phasenverschoben ist.

In der Fig.25 ist dieses Prinzip dargestellt. Der Code kann dabei digital , ein Binärcode sein entsprechend dem Patent DE 30 10 938 oder aber auch analog entsprechend dem kanadischen Patent 1 214 277. Bei Halbwellen als Codeelemente ist bei digitaler Codierung die Frequenz 32 KHz und bei analoger Codierung 4 KHz. In der Fig.25 ist S1 das Mikrofon und E2 der Hörer des einen Teilnehmers und S2 und E1 des anderen Teilnehmers. In S1 ist noch ein Codierer, in dem aus der Sprache der Codierwechselstrom gewonnen wird. Von S1 geht der Codierwechselstrom über eine Gabel G, die Anschluss- bezw. Verbindungsleitung RL zur Gabel G des Gegenteilnehmers und zum Hörer E1. In diesem ist zusätzlich ein Decodierer, der aus dem Codierwechselstrom wieder die Sprache herstellt. Der Codierwechselstrom von S1 sei der Synchronisierwechselstrom. Von E1 wird dieser über einen Phasenschieber 90 Grad zu S2 abgezweigt, in dem er ggf. verstärkt wird. Spricht nun S2, so wird ein um 90 Grad phasenverschobener Codierwechselstrom über G,RL, G nach E2 gesendet, dort decodiert und dem Hörer als Sprache übermittelt.

Wenn z.B. kurzzeitig gleichzeitig gesprochen wird, entsteht auf dem Übertragungsweg RL ein Additionswechselstrom. Eine Auslöschung wird nicht verursacht. Dieses Prinzip kann genau so beim Duplexverkehr bei der Datenübertragung vorgesehen werden. Weitere diesbezügliche Beispiele sind in der Offenlegungsschrift DE 3802088 offenbart.

Diese Methode kann natürlich auch bei Funk z.B. beim Richtfunk verwendet werden.In der Fig.26 ist eine dienbezügliche Übersicht aufgezeichnet. Der Sendewechselstrom wird hier zugleich als Codierwechselstrom mit vorgesehen. Vorteilhaft wird eine Vorstufenmodulation verwendet. Im Oszillator Osz1 wird der Sendewechselstrom erzeugt Im Amalog/Digitalwandler A1/D1 wird das Basissignal in einen Wechselstromdigitalcode umgewandelt.-Noch einfacher ist es als Oszillator und Codierer eine Anordnung nach der Fig.7 vorzusehen. Vom Codierer aus wird dann das elektronische Relais so gesteuert, dass am Ausgang J grosse und kleine Rechteckimpulse vorhanden sind, die dann im Tiefpass TP zu einem sinusförmigen Wechselstrom geformt werden. - Über nicht eingezeichnete Verstärker gelangt dann der Codierwechselstrom zur Endstufe E und zur Sendeantenne. In der Endstufe kann man noch einen Zweigstromkreis vorsehen, in dem die Oberwellen um 180 Grad phasenverschoben werden, die dann zur Kompensation dem Hauptstromkreis wieder zugeführt werden. Auf der Empfangsseite werden die Nutzsignale über einen festen Abstimmkreis einem Verstärker V zugeführt und dann an den Digital-Analogwandler D2/A2 weitergeschaltet. Das Analogsignal wird dann z.B. über eine Vermittlung weiter geleitet.

Über den Verstärker V wird der Sendewechselstrom auch zu einem Phasenschieber von 90 Grad Ph abgezweigt und dann zum Oszillator Osz2 weitergeschaltet. Mit diesem wird der Oszillator synchronisiert. Über den Wandler A3/D3 , nicht eingezeichnete Verstärker und den Endverstärker E wird dann der Sender der entgegengesetzten Richtung betrieben. Der Empfänger E1 ist genau so wie der Empfänger E2 geschaltet, nur der Phasenschieber ist nicht erforderlich.

Ein Phasenschieber nach dem Prinzip der Fig.7 ist in der Fig. 27 dargestellt. In dieser ist zugleich ein Ausgleich für kleine Frequenzschwankungen vorgesehen. Für diesen Zweck wird ist ein Zählglied Z vorgesehen mit 1000 Ausgängen. Während einer Halbwelle des Sendewechselstromes durchläuft das Zählglied diese 1000 Ausgänge. Die Steuerimpulse Js werden in einem nicht eingezeichneten Oszillator erzeugt. Bei 90 Grad Phasenverschiebung trifft auf eine Halbwelle eine Phasenverschiebung von 45 Grad, das entspricht 250 Ausgängen.

Die vom Verstärker V kommenden Sendewechselstromhalbwellen werden einem Begrenzer zugeführt, sodass am Ausgang desselben Rechteckimpulse Jp und Jn entstehen. Diese Impulse werden dem Steuerglied St zugeschaltet.An dieses werden noch die Steuerimpulse Js und das Beginnkennzeichen Be gelegt. Das Steuerglied ist so geschaltet, dass immer nur ganze Jp bezw. Jn-Impulse beim Zählglied wirksam werden. Hat während eines Impulses Jp das Zählglied den Ausgang 1000 erreicht, so kommt das Gatter G11 in Arbeitsstellung. Am Gatter G12 ist ein Jn-Impuls und nach dem Ende des Jp-Impulses durch die Verzögerung des monostabilen Gliedes mG4 kurzzeitig noch Potential angeschaltet.

G12 wird wirksam und legt an den einen Eingang von G13 Potential, am anderen Eingang von G13 wurde bereits I-Potential von G11 aus angelegt. Am Ausgang von G13 erfolgt nun ein Potentialwechsel, der G16 am Ausgang umpolt. Dies hat zur Folge, dass G17 für das Zählglied ein Rückschaltepotential erzeugt.

Auch an die Gatter G8,G9 und G10 wird solches Potential gelegt, dass sie in Zusammenwirken mit den belegten Ausgängen 1000, 999, 1001 eines der monostabilen Glieder mG1,mG2 oder mG3 steuern. Da der Jp-Impuls das Zählglied bis 1000 gesteuert hat, wurde nun das Gatter G9 und mG2 wirksam. Wird nun mit dem nächsten Jn-Impuls das Zählglied auf den Ausgang 250 gesteuert, so wird das Gatter G6 wirksam, das das elektronische Relais ER steuert, das entsprechend der Fig.7 einen Rechteckimpuls erzeugt, der im Tiefpass zu einer Halbwelle geformt wird. Für den Jn-Impuls sind für die Ausgangsmarkierung die Gatter G15 G14 und das monostabile Glied mG5 angeordnet. Das monostabile Glied mG2 hält sich z.B. bis zum Ausgang 260 . G6 geht dann wieder in die Ausgangsstellung. Das elektronische Relais bleibt bis zur nächsten Markierung des Ausganges 250 in dieser Stellung. Wird durch eine Frequenzschwankung nur der Ausgang 999 erreicht, so wird an Stelle von G9 das Gatter G8 markiert und mG1 und G5 beim Erreichen des Ausganges 249 zur Wirkung gebracht. Wird der Ausgang 1001 erreicht, so wird G10 und mG3 zur Wirkung gebracht und beim Erreichen des Ausganges 251' das Gatter G7. Solche Frequenzschwankungen werden also auch an den 90 Grad phasenverschobenen Wechselstrom weitergegeben.

In der Fig.27a ist das Steuerglied im Einzelnen dargestellt.

Die Impulse Jn und auch das Beginnzeichen sind an das Gatter G3 geschaltet. Sind beide vorhanden, wird G3 wirksam und bringt das bistabile Glied bG in die Arbeitslage, das nun an das Gatter G1 Arbeitspotential legt. Erst jetzt kann der Jp-Impuls zur Wirkung kommen. Die Steuerimpulse Js gelangen nun über das Gatter G2, das lediglich ein Potentialumkehrgatter ist, an das Zählglied. Die weiteren Vorgänge am Zählglied sind bereits beschrieben.

In der Fig.27 kann die negative Halbwelle entweder durch den Jn-Impuls erzeugt werden, oder es wird der Durchlauf der positiven Halbwelle wiederholt, wobei die jeweils markierten Ausgänge gespeichert werden.

Der bei der Erfindung verwendete Code kann vorzugsweise ein Amplituden und/oder Phasencode sein, wie z.B. ein solcher in Fig. 16 dargestellt ist. Bei einem reinem amplitudencode kann man auch 2 Codewechselströme gleicher Frequenz vorsehen, wobei der eine dann bei der Übertragung um 90 Grad phasenverschoben wird und in der Folge mit dem anderen addiert wird.

Das Prinzip der Erfindung kann auch für die Übertragung digitalisierter Sprache. In der Fig.28 sind 5 Codierwechselströme mit einem Binärcode, wobei die Kennzustände ein grosser und ein kleiner Amplitudenwert der jeweiligen Halbwelle ist, dargestellt. Die Frequenzen sind dabei 8,12,16,20 und 24 KHz.

Man erhält dabei 20 bit, werden zusätzlich 2 Wechselströme gleicher Frequenz, jedoch um 90 Grad Phasenverschoben, vorgesehen, so erhält man 40 bit, d.h. bei 8 bit Codewörtern, wie in der Fig.28a dargestellt, kann man damit 5 digitalisierte Sprachkanäle übertragen.

In den Fig.21 und 22 genügen je Zeile bei einer Abgriffsfrequenz von ca. 30 KHz (PAM) je Zeile 2 Ton-Abgriffe, die z.B. beim Beginn der jeweiligen Bildzeile und in der Mitte der Bildzei le erfolgen können, der Abstand ist dann 32 µs. Jeder Abgriff wird dann im Analog/Digitalwandler A/D in einen 8 bit-Code umgewandelt und wird dann , wie in der Fig.21a dargestellt ist, mit den folgenden 5 Luminanzcodewörtern gesendet. In der Fig. 21a z.B. mit I/9,1o,11,12 und V/9,10,11,12. Die Abgriffe während der Bildwechselzeit müssen z.B. durch eine Zeitmessung ermittelt werden. Die Codierung erfolgt dann auch in der Bildwechselzeit.

Für das Codemultiplex kann natürlich jeder beliebige Code verwendet werden wie der AMI- oder HDH-3 Code. In den Beispielen wird vielfach ein Amplitudencode verwendet, bei dem die Codeelemente aus den Halbwellen bezw. Perioden eines sinusförmigen Wechselstromes mit den Kennzuständen kleiner und grosser Amplitudenwert bestehen. Einem Codeelement entspricht dabei einem bit. Werden z.B. 12 bit für das FBAS- und Tonsignal benötigt, so sind 12 Halbwellen erforderlich. Die Codierung kann synchron mit den Abgriffen bewerkstelligt werden, da sich die Länge der Codewörter sich nicht ändert. Wird dagegen ein Phasencode bzw. zusätzlich ein Phasencode vorgesehen, so ändert sich bei jeder Phasenänderung auch die Periodendauer, sodass bei einem periodischen Abgriff und bei gleichgerichteten Phasenänderungen die Signalabgriffe nicht mehr synchron mit dem Code sind. Zur Kompensation gibt es hier 2 Möglichkeiten - ausser einer Pufferspeicherung - einmal bei jeder Phasenänderung bis zur nächsten Phasenänderung die Nennfrequenz wieder herstellen, z.B. in der Fig.4 sei die Nennfrequenz f2 und erfolgt eine Phasenänderung T = f1 und haben die folgenden Codierungen dieselben Phasenänderungen, so werden die folgenden Codierungen mit der Nennfrequenz f2 codiert. Erst wenn sich die Phase f1 wieder ändert, erfolgt dann eine Phasenänderung in Bezug auf die Bezugsphase, d.h. beim Empfänger muss die Bezugsphase gespeichert werden. Diese kann z.B. in der Austastzeit vom Sender übertragen werden.

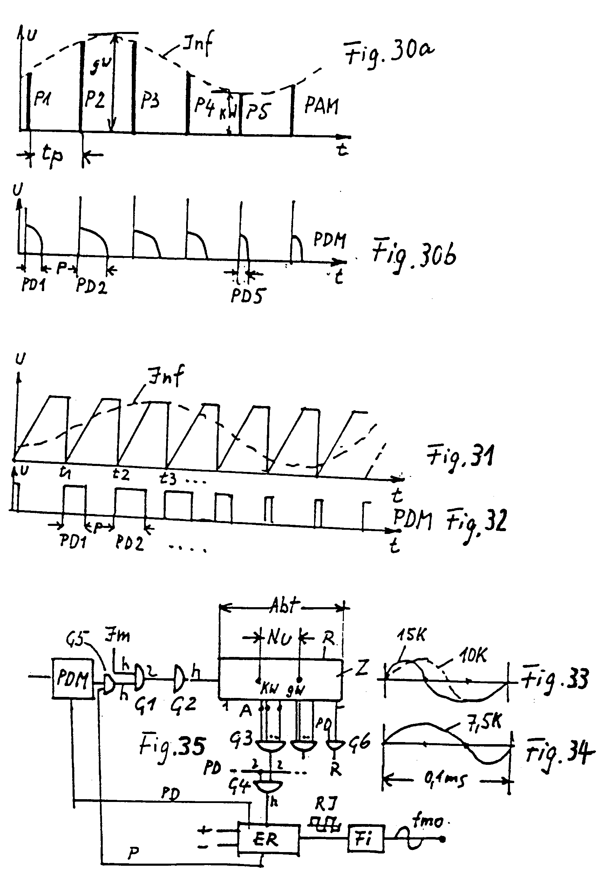

Eine andere Möglichkeit Überlappungen zweier Abgriffe zu vermeiden, besteht darin, dass beim Sender mit jedem Codewort eine Messung zwischen Codewortende und dem vorhergehenden und dem folgenden Abgriff erfolgt. Ist die Gefahr einer Überlappung in voreilender oder nacheilender Richtung vorhanden, so werden Codewörter mit den kleinsten oder grössten Periodendauern zwischengeschaltet. In den Fig.29a und 29b sind solche dargestellt. Durch Zeilenspeicherung kann man dies umgehen.

In der Fig.19 hat ein Codeelement 6 verschiedene Stufen und 2 Stellen das Codewort, infolgedessen sind 6 hoch 2 Kombinationen möglich, also 36 Kombinationen. Mit 32 Kombinationen erhält man 5 bit. In der Fig.21b kann ein Codeelement abenfalls 6 Stufen annehmen, sodass bei 5 Stellen 6 hoch 5 = 5184 Kombinationen möglich sind, also mindestens 12 bit.

Bei 12 bit erhält man 4096 Kombinationen.

In der Fig.22 wird die PAM für den Ton im TSO-Glied erzeugt und jeweils z.B. halbzeilenweise an 6c gelegt. Die Anschlüsse 6c und 6d sind nicht erforderlich , wenn der Ton und die sonstigen Signale in die Austastzeit gelegt werden, sodass dann der Konzentator K1 diese Aufgaben übernimmt.

Mit Hilfe der Fig.21,22 und 23 sollte gezeigt werden, wie man z.B. den Codemultiplex auch beim Fernsehen anwenden kann. Die Übertragungsfrequenz kann natürlich wesentlich verkleinert werden, wenn man mehr Amplituden und/oder Phasenstufen vorsieht. Man kann auch zusätzlich mit verschiedenen Trägern, wie z.B. in der Patentanmeldung P 32 29 139.6 Fig.9 vorgesehen, oder mit verschiedenen Stromwegen kombinieren. So kann man z.B. in Fig.28 mit 8 KHz einen 64 Kbit Sprachkanal übertragen, und zwar mit einem Binärcode. 2 Stellen werden jeweils durch die beiden Halbwellen eines 8 KHz Wechselstromes markiert, 2 weitere Stellen durch die 2 Halbwellen eines Wechselstromes , der um 90 Grad phasenverschoben ist.

Diese beiden Wechselströme werden summiert und als ein Wechstrom über den einen Stromweg übertragen. Dasselbe erfolgt über einen 2. Stromweg, sodass das Codewort 8-stellig und 2-stufig ist, sodass man 256 Kombinationen erhält. Auf der Empfangsseite wird nach der Auswertung der Halbwellen und natürlich Zwischenspeicherung eine Dekodierung vorgenommen.

Die Codierung kann auch duobinär erfolgen.

Eine weitere Methode, insbesondere analoge Signale wie Sprache, Töne, das Lumiananzsignal beim Fernsehen, die Farbsignale beim Fernsehen, Fernwirkwerte, frequenzmoduliert zu übertragen und zwar mit weniger Bandbreite, besteht darin mit Hilfe der Pulsdauermodulation PDM die Grösse der PAM-Impulse ind PDM Impulslängen umzuwandeln. Diese PDM-Impulse können dann in Wechselstromimpulse z.B. nach dem Verfahren der Fig.7 umgewandelt werden. Die Impulse werden dann durch die Halbwellen bzw. Perioden eines Wechselstromes gebildet, wobei die Periodendauern bzw. Halbperiodendauern der Halbwellen bzw. Perioden gleich der Länge der PDM-Impulse werden.

Das Spektrum der bisher verwendeten frequenzmodulierten Schwingung enthält oberhalb und unterhalb des Trägers eine grosse Anzahl von Seitenschwingungen, sodass ein sehr breites Band bei der Übertragung erforderlich ist. Die bnötigte Bandbreite ist dabei grösser als der doppelte Frequenzhub. Bei der erfindungsgemässen Schaltung können überwiegend digitale Schaltmittel verwendet werden, sodass eine preiswerte Herstellung möglich ist

Nachstehend wird nun die Methode an Hand von Zeichnungen näher erläutert. Zuerst werden bekannte Schaltungen nochmals erläutert,die u.a.bei der Erzeugung notwendig sind(Europäische Patentanmeldung 0 284 019). 2 Ausführungsbeispiele der Erfindung werden nachstehend beschrieben. Zuerst werden die Prinzipien der beiden Ausführungen zusammengefasst. Die Information wird einmal pulsamplitudenmoduliert und in der Folge mit Hilfe des Äquidestanzverfahrens in pulsdauern umgewandelt, oder aber die Information wird unmittelbar mit Hilfe des Sägezahnverfahrens in Pulsdauern codiert. Diese Pulsdauern werden dann in Verbindung mit den Pausen zwischen den Pulsdauern zu Rechteckimpulsen und in der Folge mit Hilfe von Filtern zu sinusförmigen Codierwechselströmen umgewandelt. Die Umformung der Pulsdauern und Pausen erfolgt mit Hilfe von Zählgliedern in Verbindung mit elektronischen Schaltern. Die Pulsdauer entspricht dann der Dauer einer Halbperiode bezw. Periode des Codierwechselstromes. Ist die Pulsdauer klein, ist die Frequenz der Halbwelle bezw. Periode beim Codierwechselstromes hoch, ist die Pulsdauer gross, so ist die Frequenz der Halbwelle bezw. Periode beim Codierwechselstrom klein. Auf der Empfangsseite erfolgt die Auswertung beispielsweise durch Abmessung der Halb- bezw. Periodendauern. Hier liegt also gleichzeitig eine Frequenz- und Phasenmodulation vor.

Bei der 2. Ausführungsform werden der Pulsdauerimpuls, in Fig 32PD1,PD2 und die Pause zwischen den Pulsdauern (Fig 32,P) - die Pulsdauer und die Pause entspricht z.B. jeweils dem Abstand zwischen 2 Abgriffen, in Fig30 amit tp bezeichnet.-einem elektronischen Relais zugeführt, in dem dann bipolare Rechteckimpulse erzeugt werden. Mit Hilfe von Filtern wird dann der frequenzmodulierte Codierwechselstrom erzeugt.

In der Fig.7 ist dargestellt wie mit Hilfe eines Zählgliedes Z in Verbindung mit der Frequenz der Fortschalte- bezw. Messimpulse , die im Oszillator Osc erzeugt werden, die Zeit eines Pulses bestimmt wird. Der jeweilige Ausgang des Zählgliedes markiert dann die Zeit. Dieser wird dann in Verbindung mit Gattern für die Steuerung eines elektronischen Relais ER vorgesehen. Dieses erzeugt dann bipolare Rechteckimpulse.

Die Funktion ist im Einzelnen folgende. Im Oszillator Osc werden die Fortschalte- bezw. Messimpulse für das Zählglied Z erzeugt. Diese gelangen über das Gatter G1 auf das Zähl glied Z, solange das Beginnzeichen an B vorhanden ist. Im Beispiel werden nur die Ausgänge Z1 und Z2 des Zählgliedes benötigt. Diese Ausgänge liegen an den Gattern G2 und G3.

Soll die Halbperiode des Rechtimpulses J die Grösse der Summe der Messimpulse bis Z1 haben, wird vom Codierer Cod aus an g3 h-Potential gelegt, sodass beim Erreichen des Ausganges Z1 am Ausgang von G3 ein Potentialwechsel stattfindet, der das elektronische Relais ER veranlasst den Rechteckimpuls zu beenden. War dies ein positiver Impuls, so wird der nächste Impuls negativ. Das Zählglied wird dann in dieser Stellung wieder zurückgeschaltet. Am Ausgang z2 ist hierfür das Gatter G4 vorgesehen. Vom Codierer aus kann auch über fA die Oszillatorfrequenz vergrössert oder verkleinert werden, sodass man z.B. mit den jeweiligen Ausgängen verschiedene Zeiten markieren könnte. Vom Codierer Cod geht auch eine Verbindung A zu ER, mit der man verschiedene Impulsgrössen J steuern kann.

Die Rechteckimpulse werden über einen Tiefpass TP , den Übertrager Ü und Filter Fi als sinusförmiger Codierwechselstrom auf die Leitung gegeben. Die Halb- bezw. Periode des Codierwechselstromes ist dieselbe wie die des Rechteckimpulses.

Das Prinzip der Umwandlung der Rechteckimpulse in einen sinusförmigen Wechselstrom ist in der Fig.3 dargestellt. Werden z.B. Rechteckimpulse mit der Frequenz 1 MHz mit einem Tiefpass 5,5 MHz bandbegrenzt, so erhält man, wie in der Fig.3c dargestellt ist,noch ziemlich steile Flanken. In der Fig.3b wurde ein Tiefpass von 3,5 MHz eingesetzt, man sieht, dass hier die Flankensteilheit schon merklich nachgelassen hat.

In der Fig 3a ist ein Tiefpass von 1,5 MHz eingeschaltet, beim Empfänger hat man hier einen sinusähnlichen Wechselstrom. Die Periodendauern sind dabei die gleichen wie die der Rechteckimpulse, d.h. man kann die Periodendauern als Mass für die Frequenzen bezw. Phasen hernehmen. In der Fig. 7 wurde dieses Prinzip bei der Umwandlung der Rechteckimpulse J in einen Codierwechselstrom mit Hilfe des Tiefpasses TP angewendet.

In der Fig.4 sind Rechteckimpulse verschiedener Periodendauern aufgezeichnet, und zwar durch die Frequenzen ausgedrückt f,f1 und f2. Diese Rechteckimpulse haben gegeneinander verschiedene Phasenverschiebungen bezw. verschiedene Frequenzen. Man sieht hieraus, dass man durch Änderung der Periodenauern Phasensprünge bezw. Frequenzsprünge hervorrufen kann, sodass man hierdurch auch eine Frequenzmodulation erhält. In der Fig.5 erfolgt solch ein Phasen- bezw. Frequenzsprung stufenweise. Damit wird erreicht, dass die Bandbreite klein wird. Wie aus der Fig 6 hervorgeht, erhält man bei Phasensprüngen von 5 Grad je 180 Grad bei 4 Phasensprungstufen eine Gesamtphasenverschiebung von 40 Grad.

In der Fig30a sind PAM-codierte Pulse von einem Signal Inf dargestellt. Diese werden mit Hilfe eines Äquidistanzverfahren in Pulsdauerimpulse , wie in der Fig30b gezeigt ist, umgewandelt.

Der Abstand der PAM-Impulse (Fig30a tp) zueinander entspricht jeweils einer Pulsdauer PD und einer Pause P , wie in der Fig30b dargestellt. Eine Pulsdauermodulation kann auch mit Hilfe des Sägezahnverfahrens durchgeführt werden. In den Fig.31 und 32 ist dieses Verfahren dargestellt. Die Pulsdauern sind Rechteckpulse PD1,PD2 ,...Weiterhin sind bekannt die symmetrische PDM und die bipolare PDM. (siehe auch Buch "Modulationsverfahren" von Stadler 1983).

In der Fig.35 ist ein Ausführungsbeispiel gemäss der Erfindung dargestellt. Im Pulsdauermodulator PDM werden die Pulse z.B. nach Fig30b oder 32 erzeugt, und über G5 an das Gatter G1 geführt.Am anderen Eingang des Gatters G1 liegen die Messimpulse Jm, z.B. 100KHz Frequenz. Solange an G1 ein PD-Puls liegt, werden die Messimpulse Jm am Ausgang wirksam. Über das Potentialumkehrgatter G2 gelangen die Messimpulse an das Zählglied Z, das mit diesen Impulsen gesteuert wird. Die Zahl der Ausgänge am Zählglied entspricht z.B. dem Abstand zwischen 2 PAM-Pulsen, in Fig30a tp. Die Abgriffsfrequenz sei 10 Khz, dann hätte das Zählglied 100.000 Ausgänge. Der Frequenzhub wird durch den grössten und kleinsten Amplitudenwert der Information Inf bestimmt, in Fig30 amit gw und kw bezeichnet.

Die Ausgänge A des Zählgliedes Z führen zu Gattern G3 und die Ausgänge der Gatter zu Gattern G4. Jeweils am anderen Eingang des Gatters G4 liegt der jeweilige PD-Impuls, der das Gatter G4 sperrt. Erst wenn der PD-Impuls nicht mehr da ist, kann auch das Ausgangspotential über G3 an G4 wirksam werden. ER erhält nun über G4 ein Potentialwechselkennzeichen für den nächsten Rechteckimpuls. Der Beginn des Rechteckimpulses wird durch den jeweiligen PD-Puls markiert. Der nächste Rechteckimpuls wird durch die Pause P (Fig30b P) bestimmt. Von ER wird über P ein Potential an Gatter 5 gelegt, damit am Gatter G1 die Messimpulse Jm wieder durchlässig werden. Das Zählglied Z wird nun bis zum Ausgang Gatter G6 geschaltet. Wenn der nächste PD-Puls wieder kommt wird G6 wirksam und über R wird das Zählglied wieder in die Ausgangsstellung geschaltet. Am Ausgang von ER sind dann Rechteckimpulse RJ der Grösse der Halbperioden wie die der PD- pulse und der Pausen P. Im Filter Fi werden die Rechteckimpulse zu sinusförmigen Halbwellen fmo, damit ist die Information frequenzmoduliert. Die Halbperioden der Nutzsignalmodulationsfrequenzen bewegen sich dann zwischen den Halbperiodendauern am Zählglied mit kw und gw gekennzeichnet. In Fig.33 ist z.B. kw = 15 KHz, die Mittenfrequenz 10 KHz und in Fig. 34 gw = 7,5 KHz. Im Beispiel können sich die Pulsdauern um die Hälfte ändern. dies ist eine Dimensionierungsache der Pulsdauermodulationsschaltungen. Die Halbwellen der Pausen haben in der Fig. 33 eine kleinste Frequenz von 7,5KHz und in Fig.34 eine grösste Frequenz von 15 KHz. Die Amplituden der Halbwellen bleiben immer gleich. Die Auswertung auf der Empfangsseite erfolgt durch Abmessung der Halbperiodendauern. Eine Synchronisierung ist nicht erforderlich, da die Nulldurchgänge einer Periode bei einer Codierung mit Hilfe einer PAM zugleich die Abgriffe codieren, es müssen also lediglich die positiven Halbwellen in PAM-Pulse umgewandelt werden.

Die PAM-Pulse sind dann auf der Empfangsseite um eine periode nacheilend.

Die Redundanz der Pausen in der Fig.35 kann vermieden werden, wenn man z.B. die PAM-Pulse speichert und nach jeder PD-Codierung den nächsten PAM-Puls abruft. Beim Empfänger ist allerdings dann eine Synchronisierung erforderlich. Bei Verwendung der PAM auf der Sendeseite müsste die Abgriffsfrequenz von Zeit zu Zeit synchronisiert werden. In Fig.36 ist die Prinzipschaltung einer solchen Schaltung auf der Sendeseite dargestellt. Die PAM-Pulse werden im Speicher Sp gespeichert Von ER kommt über AR der Abruf des nächsten Impulses. Vorbereitend war schon der nächste Impuls als PDM-Impuls im Speicher Sp1 gespeichert. Damit wird nun über das Steuerorgan St das Zählglied Z gesteuert und auf einen entsprechenden Ausgang eingestellt. Von ER wurde auch über R das Zählglied wieder in die Ausgangsstellung gebracht. Am Steuerorgan liegen auch die Steuerimpulse Jm. Mit dem Abruf des PDM-Impulses wird auch vom Speicher Sp ein PAM-Impuls zum Pulsdauermodulator gegeben und in diesem als PDM-Impuls solange gespeichert, bis der Sp1 Speicher wieder frei ist. Zweckmässig wird man 2 Sp1 Speicher vorsehen, die dann abwechselnd an das Steuergerät nach jedem Abruf von ER gelegt werden.

Am Ende des PDM-Impulses wird über das Zählglied Z,G1,G2 ein Impuls-Endekriterium an ER gegeben. Der von ER erzeugte Rechteckimpuls PD wird auf den nächsten umgepolt, über R das Zählglied zurückgeschaltet und über AR der Abruf des nächsten PDM-Impulses in die Wege geleitet. Die Rechteckimpulse RJ werden über ein Filter weitergegeben. Es entstehen dann am Ausgang des Filters Halbwellen mit den Halbperiodendauern der PDM-Impulse, wie solche in Fig.37 dargestellt sind.

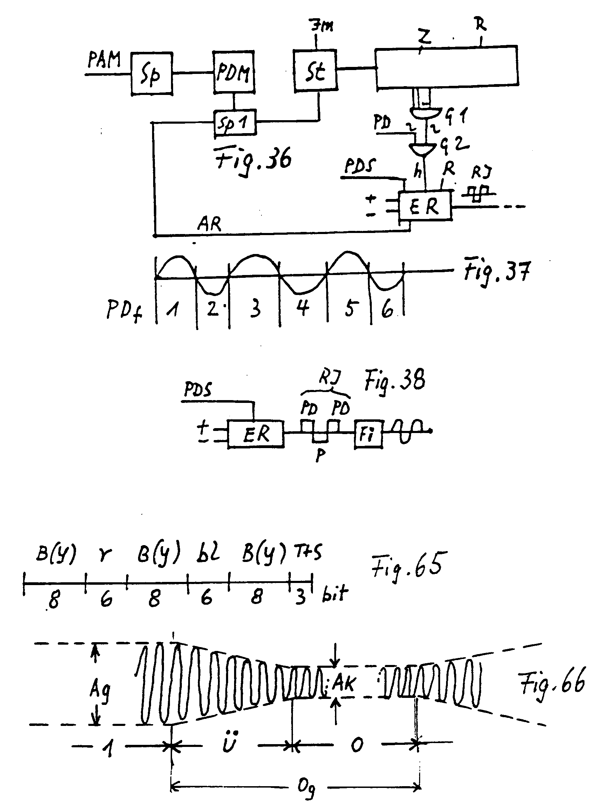

In der Fig.38 steuern die PD-Pulse und ggf Pausen der Fig. 30b, und 32 unmittelbar das elektronische Relais ER. Nach jedem Rechteckimpuls erfolgt eine Umpolung. Mit der ununterbrochenen Folge von PD-Pulsen, die durch eine Speicherung erreicht worden ist, wie in der Fig.36 dargestellt ist, kann in der Fig.38 ebenfalls das ER-Relais gesteuert werden.Nur ist nach jedem Impuls eine Umpolung erforderlich. In Fig 38 werden über PDS nur dann die Anfänge der PD-Pulse markiert, wenn eine fortlaufende Übertragung von PD-Pulsen erfolgen soll.

Bei einer Übertragung Puls/Pause ist eine Markierung von Anfang und Ende eine Pulses sowieso gegeben.

Will man bei der Übertragung eine Gleichstromfreiheit, so muss je eine gleiche Codierung des jeweiligen Pulses durch eine positive und negative Halbwelle erfolgen. Dies kann z.B. durch Speicherung in einem Schieberegister erfolgen, wobei dann bei der Auswertung eine verdrahtete Halbierung der jeweils überlaufen Ausgänge oder eine Halbierung mittels Rechner erfolgt. Eine Teilung in 2 Halbpulse kann man auch durch die symmetrische PDM bewerkstelligen.

Die PDM-Impulse der Fig.32 und Fig. 32a können auch unmittelbar an ein Filter Fi entsprechend der Fig.38 angeschaltet werden. Um die Bandbreite nicht zu gross werden zu lassen , ist es dann zweckmässig , wie in der Fig.32a gezeigt, die Information in die Sägezahnspannungen so zu legen, dass der Unterschied in der Länge bezw. Breite der Impulse zu gross wird.

Die PD-Impulse nach der Fig.30b können auch unmittelbar an das ER-Schaltmittel gelegt werden. Nach jedem Impuls muss dann automatisch eine Umpolung , oder kein Potential an die Rechteckimpulse gelegt werden . Die Rechreckimpuls wären dann unipolar. Um beim Äquidistanzverfahren bei unmittelbarer Steuerung des ER-Schaltmittels die Bandbreite ebenfalls zu verringern müsste man bei der Erzeugung der PAM-Impulse eine grössere Gleichstromvorspannung (bei unipolarer PAM), oder aber eine entsprechende Dimensionierung der Schaltung für die Erezeugung der PDM vornehmen.

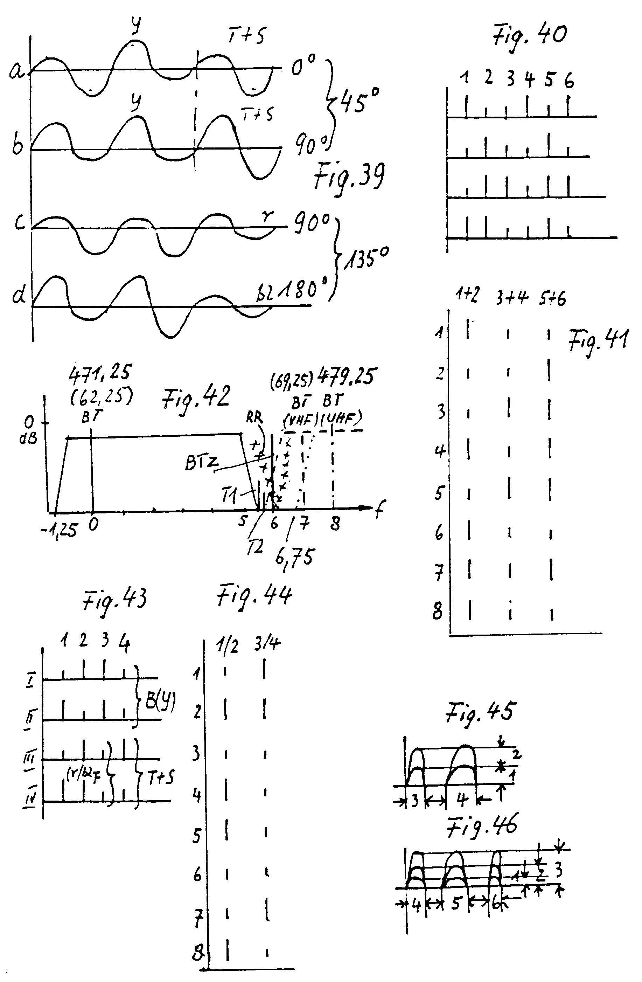

In der Fig.39 sind 4 Kanäle dargestellt mit einer Halbwellencodierung mit den Kennzuständen grosser und kleiner Amplitudenwert.Für alle 4 Kanäle ist die Frequenz die gleiche.

Diese 4 Kanäle werden für die Codierung der Farbfernsehsignale vorgesehen. 8 bit sind für das Y-Signal (Luminanzsignal) und zwar je 4 bit beim Kanal a und b. je 2 bit in den Kanälen a und b sind für Ton und sonstige Signale T + S vorgesehen. Der Kanal c ist für die Codierung des rot-Signales und der Kanal d für die Codierung des blau-Signals mit je 6 bit vorhanden. Je 2 Kanäle werden dann entsprechend der Fig. 11 Vektor I,(k1,k2) mit den Codierungen I,(II),IV, III) zusammengefasst, sodass ein Summenwechselstrom entsprechend der Fig.9 zustandekommt. Die Phasenlage der beiden Summenwechselströme wird dann auf 0 Grad und 90 Grad festgelegt. Diese beide Summenwechselströme kann man nun auf der Basis der Quadraturamplitudenmodulation übertragen, sodass für die Übertragung aller Farbfernseh- und sonstigen Signale ein schmales Band benötigt wird. Als doppelte QAM übertragen, d.h. Kanal a + b quadraturamplitudenmoduliert und die Kanäle c + d quadraturamplitudenmoduliert, wobei die Kanäle zueinander 0°,90°,90° und 180° Phasenlage aufweisen und deren Summe wechselströme 45° und 135° Phasenlage haben, und dass die beiden Summenwechselströme wieder quadraturamplitudenmoduliert werden, ist die Auswertung schwieriger, wie auch aus der Fig.11 ersichtlich ist (bei einmaliger QAM entstehen die Vektoren I,II und III).

Man kann die 4 Kanäle bezw. ihre binäre Werte auch codemultiplex übertragen. In der Fig.40 sind die Binärwerte der 4 Kanäle nochmals dargestellt. Entsprechend der Fig.41 sollen jeweils 2 Reihen der Fig.40 zu 8 bit zusammengefasst werden.

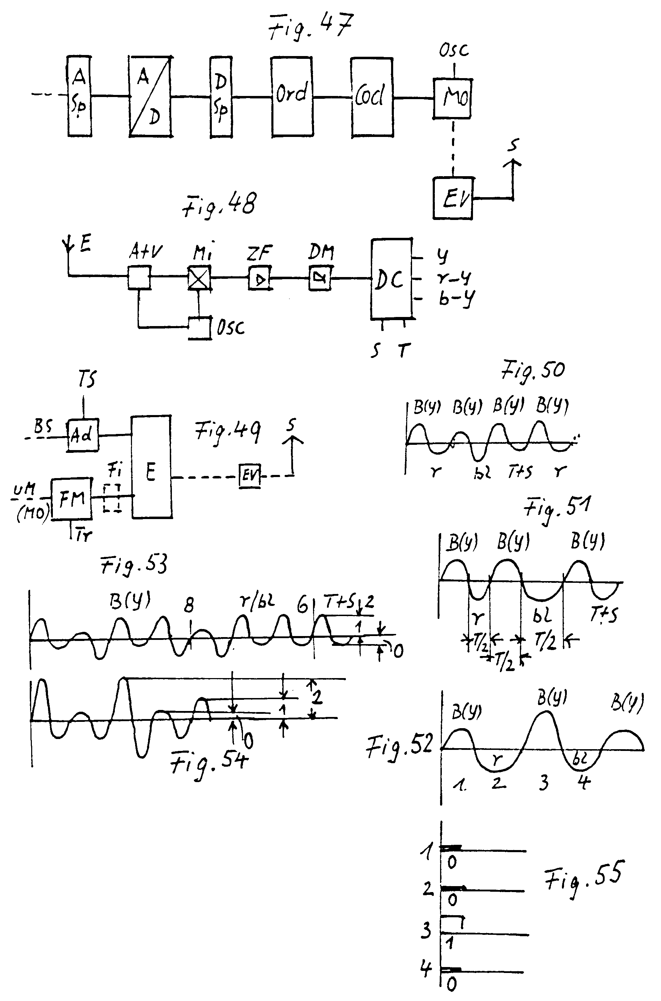

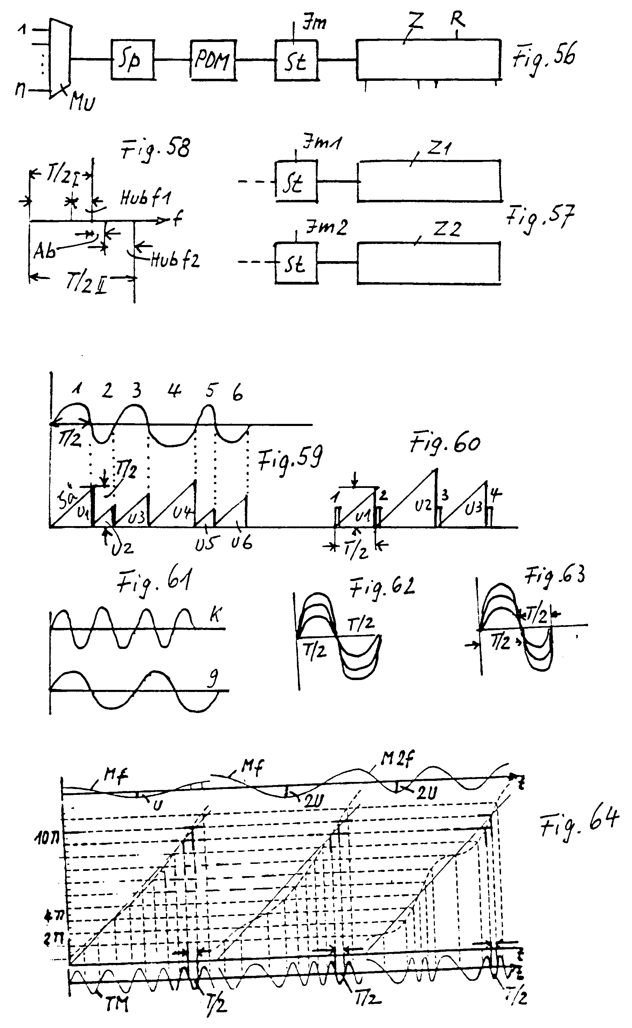

In der Fig.39 sei 6 MHz die Frequenz der Wechselströme, für die Codierung sind dann 18 MHZ erforderlich. Verwendet man in der Fig.41 eine duobinäre Codierung entsprechend der Fig. 62 mit den Halbwellen als Codeelemente, so würde man zwar gegenüber der Fig.39 an Bandbreite etwas gewinnen, aber die Frequenz wäre 3mal so hoch. Fasst man die Reihen 1,2,3 und 4,5,6 , also 12 bit jeweils zusammen bei diesem duobinären Code, so ist für eine Reihe 1,2,3 ein 3-stufiges Codewort mit 8 Stellen erforderlich. 8 Stellen bedeuten 4 Perioden, Es wäre also eine Frequenz von 2x24 MHz erforderlich, also auch für diesen Zweck zu hoch. In der Fig.45 ist ein 4-stufiges Codeelement dargestellt. bei 4 Stellen ergibt dies 256 Möglichkeiten. Eine Codierung nach Fig.41 ergäbe eine Frequenzreduzierung auf 36 MHz. In der Fig.63 ist ein 6 stufiges Codeelement dargestellt. Um 3 Reihen der Fig.40 seriell zu codieren , also 12 bit, wären hier 5 Stellen erforderlich.

Es wären also noch 30 MHz erforderlich. Ausser den 3 Amplitudenstufen sind noch zwei Phasenstufen bezw. Periodendauern vorgesehen. In der Fig.46 sind 3 Amplituden und 3 Phasenstufen dargestellt.Werden aus der Anordnung der Fig.40 2 Reihen mit je 12 bit gebildet, sind für jede Reihe 3 Stellen erforderlich, für beide Reihen also 6 Stellen, d.h. es ist eine Frequenz von 18 MHz notwendig.

In der Fig.43 sind die Farbfernsehsignale anderst angeordnet. 8 bit für einen Y-Abgriff (Luminanz,Bildpunkt B) sind seriell zu je 4 bit, die Farben rot oder blau seriell je 3 bit in den Reihen III + IV. Das jeweils 4.bit in den Reihen 3 und 4 ist für Ton- und andere Zwecke vorgesehen. Die Farbe rot oder blau kommt jeweils bei jedem 2. Y-Signal, d.h. diese wechseln sich laufend ab. Werden die senkrechten Reihen 1/2 und 3/4 , wie in der Fig.44 dargestellt, zusammengefasst, so ergeben sich bei einer Codierung günstigere Verhältniss. Bei 4 Stufen sind 3 Stellen erforderlich, es ist dann eine Frequenz von 18 MHz erforderlich. Werden die Reihen 1/2 und 3/4 parallel angeordnet, also 16 bit, so sind bei einer Codierung nach Fig.46 4 Stellen erforderlich, also 12 MHz Frequenz.

Die doppelte QAM der Fig.39 kann, um noch mehr Sicherheit bei der Übertragung zu haben, frequenzmoduliert übertragen werden. Der Summenwechselstrom hat nur kleine Frequenzänderungen, sodass, wie aus der Fig.64 hervorgeht, die frequenzmodulierte Schwingung doch schmalbandig übertragen werden kann. Aus dieser Fig. geht hervor, dass die Halbperiodendauer T/2 bei einer Frequenzerhöhung sehr klein wird, dass also die Frequenz stark zunimmt. Bei einer Modulationsfrequenz Mf und einer Amplitude u ist die Halbperiodendauer T/2, bei doppelter Amplitude 2u ist die Halbperiodendauer kleiner, während bei zusätzlich doppelter Frequenz M2f sich die Halbperiodendauer wesentlich verkleinert.

In der Fig.47 ist eine Übersicht über einen Fernsehsender dargestellt, bei der die in den Fig. 40,41,43 und 44 erläuterten Codes verwendet werden. Vom Multiplexer (nicht eingezeichnet) kommen die analog abgegriffenen Signale in den Analogspeicher ASp und von dort werden die Probeentnahmen an einen oder mehrere Analog/Digitalwandler weitergegeben.

Die digitalisierten Signale werden dann im Digitalspeicher DSp gespeichert und in der Folge dem Ordner zugeführt. In diesem werden sie entsprechend den Fig.40,41,43 oder 44 geordnet. So geordnet werden sie dem Codierer zugeführt.

Entsprechend dem vorbestimmten Code z.B. nach Fig.45 oder 46 oder 62 oder 63 codiert und dem Modulator MO zugeführt-Vom Oszillator wird der Sendewechselstrom dem Modulator zugeführt und der modulierte Sendewechselstrom über nicht eingezeichnete Verstärkerstufenund dem Endverstärker zur Antenne gegeben. Eine Übersicht vom Empfänger für die Auswertung der codierten Signale ist in der Fig. 48 dargestellt. Der Sebdewechselstrom kommt über die Empfangsantenne E in die Stufen Abstimmkreis/Verstärker, Mischstufe/Oszillaotr Mi/Osc , über den Zwischenfrequenzverstärker ZF zur Demodulationsstufe - der Eingang ist wie ein Überlagerungsempfänger beim Rundfunkempfang geschaltet- , am Ausgang des Demodulators ist der Codewechselstrom vorhanden. Dieser wird in den Decodierer geschaltet Die im Sendemultiplexer abgegriffenen Signale werden hier wieder erhalten,wie das Y, r-y, b-y, Ton und sonstigen Signale S und den verschiedenen Schaltungen zugeführt.

In den Fig. 50 und 51 sind analoge Codierungen der Farbfernsehsignale dargestellt. In der Fig.50 ist ein Wechselstrom gleicher Frequenz als Codewechselstrom vorgesehen. Die Amplituden der Halbwellen sind die Codeelemente. Die Abgriffsfolge ist y,r,y,bl,y,T+S usw. Die Übertragung dieser analog codierten Signale erfolgt auf der Basis der Frequenzmodulation, sodass man ein schmales Band - nur eine Frequenz Fig.64 - und auch eine Übertragungssicherheit erhält.

In der Fig.51 wird ebenfalls ein Analogcode vorgesehen. Es ist eine Phasencodierung. Der Analogcode ist durch verschieden grosse Halbperiodendauern gegeben. Die Amplituden der Halbwellen haben dabei immer dieselbe Grösse, es ist eine Art Frequenz- und Phasenmodulation. Die einzelnen Signale sind wieder seriell angeordnet , im Beispiel y,r,y,bl,y,T+S. Die Übertragung erfolgt bei einer Abgriffsfrequenz des Y__-Signales mit 6 MHz mit 6 MHz. Erfolgt ein Multiplexabgriff aller Signale, also auch des r,bl und T+S Signale , so ist eine Abgriffsfrequenz von 12 MHz erforderlich.

In der Fig.52 ist eine Codierung entsprechend der Fig.51 vorgesehen, lediglich die Ton und sonstigen Signale T+S werden durch einen überlagerten Amplitudencode codiert.

Es ist ein Binärcode mit einer grossen und einer kleinen Amplitude. Die Werte des Y und der r+bl÷Signale sind durch die Halbperiodendauern festgelegt. Synchron mit dem PDM-Impuls wird dann z.B. an das ER-Relais der Fig.36 der jeweilige Amplitudenwert gegeben in dem dann ein Rechteckimpuls mit kleiner oder grosser Spannung erzeugt wird. Die Amplitudencodeelemente können z.B. mehreren Kanälen, wie Ton Stereo usw. zugeordnet sein. In der Fig.55 sind die 4 Halbwellencodeelemente 4 verschiedenen Kanälen zugeordnet.

Eine Auswertung der PDM, PPM oder PFM-Impulse mit den Halbperiodendauern codiert, istaus der Fig. 59 ersichtlich. Diese erfolgt wieder mit Hilfe einer Sägezahnspannung. Beim Beginn einer Halbwelle, also beim Nulldurchgang wird der Erzeuger der Sägezahnspannung eingeschaltet , nach der Halbwelle beim nächsten Nulldurchgang wird z.B. mittels eines Feldeffekttransistors die Sägezahnspannung kurzzeitig an einen Kondensator geschaltet und in diesem gespeichert. Die Halbperiodendauer T/2 ist dann gleich dem Spannungswert T/2 oder analog der Grösse des Spannungswertes. Die Halbperiodendauer von 1 entspricht dem Spannungswert u1, die von 2 dem von u2, usw. Wurde auf der Sendeseite Sprache mit 8 KHz pulsamplitudenmoduliert, so muss auf der Empfangsseite mit derselben Frequenz die Spannung u1,u2,u3 jeweils abgegriffen werden und zur Sprachwechselstrom umgeformt werden. Bei einem zeitmultiplexen Abgriff mehrerer Kanäle, müssen die gespeicherten Werte u1,u2,u3,... mit derselben Frequenz des zeitmultiplexen Abgriffes wieder verteilt werden. Die Herstellung der ursprünglichen Information kann z.B. in der Weise erfolgen, indem man den ausgewerteten Code u1,u2,.. nach der Kanalzuteilung treppenförmig ausbildet und dieses Treppensignal über einen Tiefpass führt. Solche Umformungen sind bekannt und es wird daher nicht näher darauf eingegangen.

Auf dieselbe Weise wie in Fig.59 die PDM-Impulse können auch PPM-Impulse decodiert werden. In der Fig.60 ist dies dargestellt. Der Abstand T/2 der pulse wird mit der Sägezahnme thode wieder in PAM-Pulse umgeformt und gespeichert. Der Abstand T/2 entspricht dann der Spannung u1 usw.

Bei der Übertragung von Fernsehsignalen nach dem Prinzip der Fig.36 und 38 müssen die ausgewerteten Signale auf der Empfangsseite synchron verteilt werden. In der Austastzeit müssen synchronisierimpulse gesendet werden, damit entsprechend der Sendeseite die Abtastfrequenz auf der Empfangsseite die Verteilfrequenz festgelegt werden kann. Die Summe der vorkommenden grössten Halbperiodendauern je Zeile darf die Zeit von 54 us nicht überschreiten. dies ist die Zeit die für eine Zeile bei einem Bildformat 4:3 vorgesehen ist.

Im Sender müssen infolgedessen die Halbperiodendauern mit abgemessen werden u.U. muss in den Zeilencode noch ein Füllcode, der z.B. die kleinsten oder grössten Periodendauern in bestimmter Folge beinhaltet. Man kann natürlich auch andere Füllcodes vorsehen. Ausserdem ist zusätzlich die Austastzeit als Füllcode noch vorzusehen. In der Fig.61 sind die kleinsten und grössten Halbperiodendauern k und g dargestellt. Solche können z.B. abwechselnd gesendet werden.

Auf dieser Basis können auch mehrere Kanäle über einen Übertragungsweg zusammengefasst werden. In der Fig.56 ist ein solches Beispiel dargestellt. Mit dem Multiplexer Mu werden die Kanäle 1 bis n pulsamplitudenmässig zusammengefasst, was ja bekannt ist. Diese PAM-Proben werden im Speicher Sp gespeichert, vom PDM abgerufen und,wie bereits beschrieben, über ein Steuergerät St, an das die Steuerimpulse Jm angeschlossen sind, dem Zählglied zugeführt. Die übrigen Schaltvorgänge sind dieselben wie z.B. in der Fig.36 beschrieben. Nach dem Pulsdauermodulator PDM können die Impulse auch direkt entsprechend der Fig.38 weiter verarbeitet werden. Auf der Empfangsseite muss natürlich entsprechend der Abgriffsfrequenz des Multiplexers synchronisiert und verteilt werden.

In der Fig.57 ist eine andere Möglichkeit der Mehrfachausnutzung eines Stromweges aufgezeigt. Um die Codewechselströme frequenzmässig trennen zu können, werden solche Steuerimpulse verwendet, dass die Frequenzbereiche der Codewechselströme einen solchen Abstand haben, dass eine einwandfreie Auswertung möglich ist, z.B. mittels Filter eine Trennung in der Empfangsstelle. In der Fig.57 ist Z1 der eine Umsetzer mit den Steuerimpulsen Jm1 und Z2 der andere Umsetzer bezw. Zählglied mit den Steuerimpulsen Jm2. In der Fig. 58 ist die Frequenzlage der beiden Kanäle dargestellt.

T/2I und T/2II sind die kleinsten Frequenzen der beiden Kanäle . Durch den Winkelhub f2 kommt man näher an den Frequenzbereich vom Kanal T/2I. Im Beispiel ist noch ein Abstand von Ab vorhanden. Dieser kann so gewählt werden,dass preislich günstige Filter eingesetzt werden können.

Nachstehend werden noch einige Codes dargestellt, mit denen man mit einer Frequenz Daten, im Beispiel Fernsehsignale codieren und übertragen kann. In der Fig.53 ist ein Binärcode dargestellt, bei dem als Codeelemente die Amplituden von Halbwellen mit den Kennzuständen grosser und kleiner Amplitudenwert vorgesehen werden. Mit einer Halbwelle kann dan ein bit codiert werden. Für das Y-Signal sind 8 bit, für das rot und Blausignal je 6 bit und für den Ton (digitalisiert) und sonstige Signale sind 2 bit vorgesehen, Rot und blau werden abwechselnd , wie z.B. in der Fig.51 dargestellt, codiert.

Bei 6 Meg Abgriffen für das Y-Signal wäre hier ein Codierwechselstrom mit 48 MHz erforderlich. In der Fig.54 ist eine duobinäre Codierung hierfür vorgesehen. Der Codierwechselstrom hat dann eine Frequenz von 27 MHz. Man kann diese Codierwechselströme wieder frequenzmoduliert übertragen, das Frequenzband wird dabei auch nicht zu breit, wie aus der Fig. 64 hervorgeht. Die Übertragungssicherheit wird dabei noch grösser.

In der Fig.66 ist eine Möglichkeit aufgezeichnet, wie man ohne Modulatoren schmalbandig eine Nachricht digital übertragen kann. Jedem Codeelement wird eine Vielzahl von Perioden eines Wechselstromes einer Frequenz zugeordnet, die durch die Zeit Og bestimmt werden, also einer vorbestimmten Zahl von Perioden. Angenommen wird die Codierung erfolgt binär. Bei jedem Zustandswechsel, also 1 nach 0 oder 0 nach 1 erfolgt der Übergang kontinuierlich , in der Fig.66 mit Ü bezeichnet.

Die Amplituden für die Null haben die Grösse Ak und die für die 1 Ag. Kommen gleiche Werte hintereinander,so wird die Amplitudengrösse nicht geändert, bei 5 gleichen Werten würde man 5mal eine Periodenzahl von Og mit derselben Amplitude erhalten. Der Übergang zu einem anderen Kennzustand wird z.B. zur folgenden Kennzustand gerechnet, also z.B. Ü + O = Og.

In der Fig.65 ist aufgezeichnet wie man seriell die Fernsehsignale digital anordnen kann.

In den Fig.53,54 und 66 sind die Frequenzbänder für die Übertragung der Fernsehsignale sehr schmal. U.u. könnte man Kanäle zwischen die einzelnen Fernsehkanäle unterbringen.

In der Fig.42 ist hierfür der Träger BTz vorgesehen . Bei der Codierung nach der Fig.66 ist der Träger zugleich das Modulationssignal. Bei der Modulation des BAS-Signals mit dem Zwischenfrequenzträger 38.9 MHz wird ausser dem Filter für die Erzeugung des Restseitenband ein Saugkreis bezw. Reihenresonanzkreis in eine solche Frequenzlage gebracht, dass eine Kurve RR wie in der Fig.42 dargestellt, zustandekommt.

Solch ein Reihenresonanzkreis ist leicht zu realisieren.

Die Nyquistflanke dürfte durch diese Massnahme kaum beeinflusst werden.

**Patentansprüche**

1. Verfahren zur Codierung von Information mehrerer Kanäle, bei dem diese abgetastet, parallel geordnet, zu einem Codewort zusammengefügt und über einen Kanal übertragen wird, dadurch gekennzeichnet, dass zur besseren Frequenzbandausnutzung und Erhöhung der Übertragungsgeschwindigkeit die parallel angeordneten Codeelemente, ggf. unter Zwischenspeicherung, in Codewörter mit höherwertigem Code in der Weise umgewandelt wird, indem ein mehrstufiger Amplituden/Phasencode (Fig.21b,Fig.45,46) vorgesehen wird, bei dem die Grösse der Amplituden und Halbperiodendauern bzw. Periodendauern von Halbwellen oder Rechteckimpulsen (Fig.4) als Kennzustände vorgesehen werden, die in einer ununterbrochenen Folge ggf. von negativen und positiven Halbwellen bzw. Rechteckimpulsen gesendet werden.

2. Verfahren zur Codierung von Information mehrerer Kanäle, bei dem diese abgetastet, parallel geordnet, zu einem Codewort zusammengefügt und über einen Kanal übertragen wird, dadurch gekennzeichnet, dass zur besseren Frequenzbandausnutzung und Erhöhung der Übertragungsgeschwindigkeit die parallel angeordneten Codeelemente, ggf. unter Zwischenspeicherung, in Codewörter eines mehrstufigen Amplitudencodes in der Weise umgewandelt werden, indem die digitalisierte Information in die Amplituden der Halbwellen oder Perioden von Codierwechselströmen gleicher Frequenz (Fig.10.39) gelegt wird, wobei jeweils 2 mit einer Phasenverschiebung von 90° ausgebildet sind, die für die Übertragung addiert werden, wobei auch einer oder beide bereits Summencodierwechselströme sein können und wieder jeweils gegenüber dem zu addierenden Codierwechsel- bzw. Summencodierwechselstrom eine Phasenverschiebung von 90° aufweisen und für die Übertragung addiert werden (Fig.39,45°, 135°).

3. Verfahren zur Codierung von Information mehrerer Kanäle, bei dem diese abgetastet, parallel geordnet, zu einem Codewort zusammengefügt und über einen Kanal übertragen wird, dadurch gekennzeichnet, dass zur besseren Frequenzbandausnutzung und Erhöhung der Übertragungsgeschwindigkeit die parallel angeordneten analogen oder digitalen Codeelemente in einen gemischt analogen/digitalen Amplituden/Phasencode umgewandelt wird (Fig.52,55), indem die parallel geordneten analogen Abtastwerte in die Amplituden von Halbwellen oder Rechteckimpulsen bzw. Perioden oder in die Halbperioden bzw. Periodendauern von Halbwellen bzw. Perioden bezw. Rechteckimpulsen gelegt werden oder digitalisiert in Amplitudenstufen bezw. Halbperioden- bezw. Periodendauern.

4. Verfahren zur Codierung von Information mehrerer Kanäle, bei dem diese abgetastet, parallel geordnet, zu einem Codewort zusammengefügt und über einen Kanal übertragen wird, dadurch gekennzeichnet, dass zur besseren Frequenzbandausnutzung und Erhöhung der Übertragungsgeschwindigkeit die parallel angeordneten Codeelemente, ggf. unter Zwischenspeicherung, in Codewörter eines mehrstufigen Amplitudencodes in der Weise umgewandelt werden, indem mehrere Codierwechselströme vorgesehen werden, die parallel und synchron mit solchen Frequenzen betrieben werden, dass jeweils der folgende höherfrequente um die halbe Frequenz oder ein Vielfaches davon höher liegt (Fig.24,28), wobei ggf. die Codierwechselströme mehrfach in der Weise verwendet werden, in dem diese auf der Basis der Quadraturamplitudenmodulation oder der doppelten Quadraturamplitudenmodulation addiert werden (Fig.10, Fig.39).

5. Verfahren zur Codierung von Information mehrerer Kanäle, bei dem diese abgetastet, parallel geordnet, zu einem Codewort zusammengefügt und über einen Kanal übertragen wird nach den Ansprüchen 1 bis 4, dadurch gekennzeichnet, dass zur besseren Frequenzbandausnutzung und Erhöhung der Übertragungsgeschwindigkeit, Mittel vorgesehen werden, die die PAM-modulierte Information oder digitale mit A/D-Wandlern erzeugt Information, ggf. über Pulsdauern, in Halb- bezw. Periodendauern umgewandelt werden, wobei die Änderung der Periodendauern bezw. die Phasensprünge durch eine Vielzahl von Periodendauerstufen bezw. Phasensprungstufen erfolgt (Fig.5) und dass weitere Mittel vorgesehen sind, die die Stufencodierung mit einer zusätzlichen Amplitudencodierung versehen, die Phasensprungstufen und die Phasensprünge werden dabei in ununterbrochener Folge zu einem Wechselstrom zusammengefasst, wobei die Änderungen beim Nulldurchgang erfolgen, vorzugsweise wird dabei der Träger mit der Information moduliert (Fig.66).

6. Anwendung der codemultiplexen Codierung nach den Ansprüchen 1 bis 5 beim Sender von Farbfernsehsystemen, dadurch gekennzeichnet, dass die FBAS-Ton und bedarfsweise sonstigen Signale unter Berücksichtigung des Zyklus (Fig.22, Y = 5 Ausgänge bei K, Farbarts. 1 Ausg.3a) und der Wertigkeit (Fig.21, Luminanz 8bit) zu einem Codewort zuerforderlichenfalls in mehreren Codewörtern (Fig.21a), zusammengefasst werden, wobei als Codeelement wahlweise die Kombination aus analogen oder digitalen Amplitudenwerten, Halbperioden oder Periodendauern von Halbwellen bezw. Perioden bezw. Rechteckimpulsen vorgesehen werden, wobei bei gleichfrequenten Codierwechselströmen auf Amplitudenbasis das Prinzip der Quadraturmodulation oder doppelten Quadraturmodulation (Fig.39) vorgesehen wird.

7. Schaltungsanordnung für Farbfernsehempfänger zur Auswertung der nach dem Verfahren der Ansprüche 1 bis 5 codierten codemultiplexen Signalen, dadurch gekennzeichnet, dass für die Eingangsstufe bis einschliesslich Demodulator eine Schaltung entsprechend einem Superhet-Radioempfänger vorgesehen wird, dass die demodulierten Codewörter in der Folge einem Decodierer zugeführt wird, in dem die Codeelemente der Codewörter ggf. unter Zwischenspeichrung den ihnen zugeordneten Baugruppen zeit- und einsatzgerecht wobei ggf. Wandler vorgesehen werden, zugeführt werden (Fig.23,48)

8. Verwendung der Verfahren nach den Ansprüchen 1 bis 5 bei einer Anordnung für die Übertragung von Information in Verbindung mit der Frequenzlage von Fernsehkanälen, dadurch gekennzeichnet, dass zwischen den Farnsehkanalfrequenzbändern Mittel, insbesondere Reihenresonanzkreise (Fig.42,RR) vorgesehen werden, dass weiterhin in den durch den jeweiligen Reihenresonanzkreis ausgesparten Frequenzbereich ein mit einer schmalbandigen Codierung modulierter Träger eingefügt wird (Fig.66), wobei die Codierung eine multiplexe Zusammenfassung von Kanälen sein kann.

9. Verfahren zur Auswertung der Codierung nach den Ansprüchen 1,3 und 5, dadurch gekennzeichnet, dass die Decodierung der Periodendauer bezw. Phasenlage in der Weise erfolgt, indem beim Beginn der Halb- bezw. Periodendauer, durch den Nulldurchgang markiert, Mittel zur Wirkung kommen, die eine Sägezahnspannung erzeugen, und dass am Ende der Halb- bezw. Periodendauer, ebenfalls durch einen Nulldurchgang markiert, Mittel zur Wirkung kommen, die die Grösseder Sägezahnspannung zu diesem Zeitpunkt festhalten, oder die Grösse der Sägezahnspannung insbesondere in einem Kondensator (FET,C) speichern.

10. Verfahren nach den Ansprüchen 1,3 und 5, dadurch gekennzeichnet, dass eine Vervielfachung der durch Periodendauern bezw. Phasenlagen zu codierenden Information in der Weise erfolgt, indem mehrere Codierwechselströme dergestalt vorgesehen werden, indem die Mittel der Umsetzerglieder (Fig.57, Z1,Z2) mit solchen verschiedenen Frequenzen gesteuert werden (Fig.57,Jm1, Jm2), dass die jeweils entstehenden Frequenzbänder einen gut auswertbaren Abstand erhalten (Fig.58,Ab).

11. Verfahren nach den Ansprüchen 1,3 und 5, dadurch gekennzeichnet, dass eine unmittelbare Codierung und Übertragung von PAM in PDM in der Weise erfolgt, indem die den Frequenzhub bestimmenden __Grössen so dimensioniert werden, dass eine Mittellage für den Frequenzbereich zustandekommt (Fig.33,34, Fig.35,Nu).

12. Verfahren nach den Ansprüchen 1,3 und 5, dadurch gekennzeichnet, dass zur Erhaltung der Gleichstromfreiheit, insbesondere für die Kabelübertragung, die Mittel für die Unsetzung der Information in Periodendauern so ausgebildet sind, dass eine gleich grosse Amplitude für die positive und negative Halbwelle entsteht.

13. Verfahren nach den Ansprüchen 1,3 und 5, dadurch gekennzeichnet, dass für die Codierung die Kombination aus einer mehrstufiger digitaler,analogen Codierung mit den Kennzuständen Amplituden, Phasenlagen und Phasendiffernzen vorgesehen wird.

14. Anordnung für das Farbfernsehen nach dem Anspruch 7, dadurch gekennzeichnet, dass beim Farbfernsehen in der Folge zum Luminanzcodewort (Fig.21a, 1-8) bezw. Analogcodelement (Fig.50,51,52) die Codeinformation der übrigen Kanäle entsprechend ihrer Wertigkeit (Fig.21,rt,bl.T + So) in vorbestimmter Anordnung ggf. unter Berücksichtigung einer sendeund empfangsmässigen Speicherung, eingefügt wird.

15. Verfahren nach den Ansprüchen 1 bis 6, dadurch gekennzeichnet, dass zur ERhöhung der Übertragungssicherheit die Codierwechselströme frequenzmoduliert werden (Fig.64).

**Claims**

1. A method of coding information of a plurality of channels, wherein the information is scanned, arranged in parallel, combined to form a code word and transmitted via one channel, characterised in that for the purpose of better frequency band utilisation and increased transmission speed the parallel code elements are converted, with intermediate storage if required, into code words having a higher-order code by the provision of a multi-stage amplitude/phase code (Fig. 21b, Fig. 45, 46), the magnitude of the amplitudes and half-period durations or period durations of half-waves or rectangular pulses (Fig. 4) being provided as identification states which are transmitted in an uninterrupted sequence, if required of negative and positive half-waves or rectangular pulses.

2. A method of coding information of a plurality of channels, wherein the information is scanned, arranged in parallel, combined to form a code word and transmitted via one channel, characterised in that for the purpose of better frequency band utilisation and increased transmission speed the parallel code elements are converted, with intermediate storage if required, into code words of a multi-stage amplitude code by placing the digitised information into the amplitudes of the half-waves or periods of coding alternating currents of the same frequency (Fig. 10.39), each pair being formed with a 90° phase shift and being added for the transmission, it being possible for one or both already to be summated coding alternating currents and again having a 90° phase shift relative to the coding alternating current to be added or the summated coding alternating current and being added for the transmission (Fig. 39, 45°, 135°).

3. A method of coding information of a plurality of channels, wherein the information is scanned, arranged in parallel, combined to form a code word and transmitted via one channel, characterised in that for the purpose of better frequency band utilisation and increased transmission speed the parallel analog or digital code elements are converted to a mixed analog/digital amplitude/phase code (Fig. 52, 55), by placing the parallel analog scanned values in the amplitudes of half-waves or rectangular pulses or periods or into the half-periods or period durations of half-waves or periods or rectangular pulses or digitised in amplitude stages or half-period or period durations.

4. A method of coding information of a plurality of channels, wherein the information is scanned, arranged in parallel, combined to form a code word and transmitted via one channel, characterised in that for the purpose of better frequency band utilisation and increased transmission speed the parallel code elements are converted, with intermediate storage if required, into code words of a multi-stage amplitude code, by the provision of a plurality of coding alternating currents which are operated in parallel and in synchronism with such frequencies that the next highest frequency in each case is higher by half the frequency or a multiple thereof (Fig. 24, 28), the coding alternating currents being repeatedly used if required by adding them on the basis of quadrature amplitude modulation or double quadrature amplitude modulation (Fig. 10, Fig. 39).

5. A method of coding information of a plurality of channels, wherein the information is scanned, arranged in parallel, combined to form a code word and transmitted via one channel according to claims 1 to 4, characterised in that for the purpose of better frequency band utilisation and increased transmission speed, means are provided which convert the PAM-modulated information or digital information produced by A/D converters, by way of pulse duration if required, into half durations or period durations, the change of the period durations or the phase jumps being effected by a plurality of period duration stages or phase jump stages (Fig. 5) and in that other means are provided which provide the stage coding with an additional amplitude coding, the phase jump stages and the phase jumps being combined in uninterrupted sequence to form an alternating current, the changes occurring on the crossing of the zero-axis, the carrier preferably being modulated with the information (Fig. 66).

6. Use of code-multiplex coding according to claims 1 to 5, in a colour television system transmitter, characterised in that the composite colour signal sound and, if necessary, other signals are combined into a code word or if necessary a number of code words (Fig. 21a), allowing for the cycle (Fig. 22, Y = 5 outputs at K, chromaticity signal 1 output 3a) and significance (Fig. 21, luminance 8 bit), the code element provided being optionally the combination of analog or digital amplitude values, half-periods or period durations of half-waves or periods or rectangular pulses, the principle of quadrature modulation or double quadrature modulation (Fig. 39) being provided in the case of equi-frequency coding alternating currents on an amplitude basis.

7. A circuit arrangement for colour television receivers for the evaluation of code-multiplex signals coded by the method of claims 1 to 5, characterised in that a circuit corresponding to a superhet radio receiver is provided for the input stage up to and including the demodulator, in that the demodulated code words are fed in sequence to a decoder in which the code elements of the code words, with intermediate storage if required, are fed to their associated units at the correct time and threshold, converters being provided if required (Fig. 23, 48).

8. Use of the methods according to claims 1 to 5, in an arrangement for transmitting information in conjunction with the frequency position of television channels, characterised in that means, more particularly series resonant circuits (Fig. 41, RR), are provided between the television channel frequency bands, and in that a carrier modulated with a narrowband coding is inserted into the frequency range slot formed by the associated series resonant circuit (Fig. 66), wherein the coding may be a multiplex combination of channels.

9. A method of evaluating the coding according to claims 1, 3 and 5, characterised in that the decoding of the period duration or phase position is effected by means which, at the start of the half duration or period duration marked by the passage through the zero-axis, come into operation to generate a sawtooth voltage, and in that at the end of the half duration or period duration, again marked by passage through the zero-axis, means are operative which retain the magnitude of the sawtooth voltage at that time, or store the magnitude of the sawtooth voltage, more particularly in a capacitor (FET, C).

10. A method according to claims 1, 3 and 5, characterised in that multiplication of the information to be coded by period durations or phase positions is effected by providing a plurality of coding alternating currents by controlling the means of the conversion elements (Fig. 57, Z1, Z2) at different frequencies (Fig. 57, Jm1, Jm2) such that the associated resulting frequency bands receive a spacing which can be readily evaluated (Fig. 58, Ab).

11. A method according to claims 1, 3 and 5, characterised in that direct coding and transmission from PAM to PDM is effected by so dimensioning the values defining the frequency deviation that a median position is produced for the frequency range (Fig. 33, 34, Fig. 35, Nu).

12. A method according to claims 1, 3 and 5, characterised in that to obtain DC independence, more particularly for cable transmission, the means for converting the information into period durations are so devised that an equal amplitude is obtained for the positive and negative half-wave.

13. A method according to claims 1, 3 and 5, characterised in that the combination of a multistage digital, analog coding having the identification states: amplitudes, phase positions and phase differences, is provided for the coding.

14. An arrangement for colour television according to claim 7, characterised in that in colour television the code information of the other channels corresponding to their significance (Fig. 21, rt, b1.T + So) is added in sequence to the luminance code word (Fig. 21a, 1-8) or analog code element (Fig. 50, 51, 52), in a predetermined arrangement, if required allowing for storage in accordance with transmission and reception.

15. A method according to claims 1 to 6, characterised in that the coding alternating currents are frequency-modulated in order to increase transmission security (Fig. 64).

**Revendications**

1. Procédé de codage de l'information de plusieurs canaux, dans lequel celle-ci est lue, arrangée en parallèle, rassemblée en un mot de code et transmise par un canal, caractérisé en ce que pour améliorer l'utilisation de la bande de fréquences et pour accroître la vitesse de transmission, les éléments de code arrangés en parallèle sont convertis, éventuellement avec mémorisation intermédiaire, en mots de code avec code de valeur élevée d'une manière telle qu'il est prévu un code amplitudes/phases à plusieurs niveaux (fig. 21b, fig. 45, 46), dans lequel la grandeur des amplitudes et des durées de demi-période ou des durées de période de demi-ondes ou d'impulsions rectangulaires (fig. 4) sont prévues en tant qu'états caractéristiques qui sont émis en une suite ininterrompue éventuellement de demi-ondes négatives ou positives ou d'impulsions rectangulaires.

2. Procédé de codage de l'information de plusieurs canaux, dans lequel celle-ci est lue, arrangée en parallèle, rassemblée en un mot de code et transmise par un canal, caractérisé en ce que pour améliorer l'utilisation de la bande de fréquences et pour accroître la vitesse de transmission, les éléments de code arrangés en parallèle sont convertis, éventuellement avec mémorisation intermédiaire, en mots de code d'un code d'amplitudes à plusieurs niveaux, d'une manière telle que l'information numérisée est introduite dans les amplitudes des demi-ondes ou périodes de courants alternatifs de codage de même fréquence (fig. 10.39), deux d'entre eux, présentant un déphasage de 90°, qui sont additionnés pour la transmission, l'un ou tous deux pouvant être déjà des courants alternatifs de codage additionnés et présentant chacun à nouveau, par rapport au courant alternatif de codage à additionner ou au courant alternatif de codage additionné, un déphasage de 90° et étant additionnés pour la transmission (fig. 39, 45°, 135°).

3.   Procédé de codage de l'information de plusieurs canaux, dans lequel celle-ci est lue, arrangée en parallèle, rassemblée un mot de code et transmise par un canal, caractérisé en ce que pour améliorer l'utilisation de la bande de fréquences et pour accroître la vitesse de transmission, les éléments de code analogiques ou numériques, arrangés en parallèle, sont convertis en un code amplitudes/phases analogique/numérique mixte (fig. 52, 55), en ce que les valeurs analogiques lues, disposées en parallèle, sont introduites dans les amplitudes de demi-ondes ou d'impulsions rectangulaires ou périodes ou dans les demi-périodes ou durées de période de demi-ondes ou périodes ou impulsions rectangulaires ou sont numérisées en étages d'amplitude ou durées de demi-période ou durées de période.

4.   Procédé de codage de l'information de plusieurs canaux, dans lequel celle-ci est lue, arrangée en parallèle, rassemblée en un mot de code et transmise par un canal, caractérisé en ce que pour améliorer l'utilisation de la bande de fréquences et pour accroître la vitesse de transmission, les éléments de code arrangés en parallèle, sont convertis, éventuellement avec mémorisation intermédiaire, en mots de code d'un code d'amplitude à plusieurs niveaux par le fait que plusieurs courants alternatifs de codage sont prévus qui fonctionnent en parallèle et de manière synchrone avec des fréquences telles que celui de fréquence immédiatement supérieure se situe à la demi-fréquence au-dessus ou à un multiple de la fréquence (fig. 24, 28), les courants alternatifs de codage étant éventuellement utilisés plusieurs fois en ce que ceux-ci sont additionnés sur la base de la modulation d'amplitude déphasée en quadrature ou de la double modulation d'amplitudes déphasée en quadrature (fig. 10, fig. 39).

5.   Procédé de codage de l'information de plusieurs canaux, dans lequel celle-ci est lue, arrangée en parallèle, rassemblée en un mot de code et transmise par un canal selon les revendications 1 à 4, caractérisé en ce que pour améliorer l'utilisation de la bande de fréquences et pour accroître la vitesse de transmission, il est prévu des moyens qui convertissent l'information modulée pôle-amplitude ou l'information produite par des convertisseurs analogiques/numériques, éventuellement par des durées d'impulsions, en durées de demi-période ou de période, le changement des durées de période ou les sauts de phase s'effectuant par un grand nombre de niveaux de durées de période ou d'étages de saints de phase (fig. 5) et en ce que d'autres moyens sont prévus qui affectent au codage par niveaux un codage d'amplitude supplémentaire, les étages des sauts de phase et les sauts de phase étant dans ce cas réunis en une succession interrompue pour former un courant alternatif, les changements se produisant au passage par zéro, la porteuse avec l'information étant dans ce cas de préférence modulée (fig. 66).

6.   Mise en oeuvre du codage multiplex selon les revendications 1 à 5 pour l'émetteur de systèmes de télévision couleur, caractérisée en ce que le son signal complet de chrominance et au besoin d'autres signaux sont réunis en un mot de code, si nécessaire en plusieurs mots de code (fig. 21a), en tenant compte du cycle (fig. 22, Y = 5 sorties pour K, s type de couleur 1 sortie 3a) et de la valeur (fig. 21, luminance 8 bits), comme éléments de code la combinaison de valeurs d'amplitudes analogiques ou numériques, de demi-périodes ou de durées de période de demi-ondes ou périodes ou impulsions rectangulaires étant prévus, le principe de la modulation déphasée en quadrature ou de la double modulation déphasée en quadrature (fig. 39) étant prévu pour les courants alternatifs de codage de même fréquence sur la base des amplitudes.

7.   Montage pour récepteur de télévision couleur pour l'exploitation de signaux à code multiplex codés selon le procédé des revendications 1 à 5, caractérisé en ce que pour l'étage d'entrée jusqu'au démodulateur compris il est prévu un montage correspondant à un récepteur radio superhétérodyne, en ce que les mots de code démodulés sont envoyés dans l'ordre à un décodeur dans lequel les éléments de code des mots de code sont envoyés, éventuellement avec mémorisation intermédiaire, aux composants qui leur sont affectés, en temps utile et suivant l'utilisation, des convertisseurs étant éventuellement prévus (fig. 23, 48).

8. Mise en oeuvre des procédés selon les revendications 1 à 5 dans un dispositif pour la transmission d'une information en liaison avec la position en fréquence de canaux de télévision, caractérisée en ce qu entre les bandes de fréquence des canaux de télévision il est prévu des moyens, en particulier des circuits de résonance série (fig. 42, RR), en ce qu'en outre il est ajouté dans la gamme de fréquences, réservée par le circuit de résonance série respectif, une porteuse modulée avec un codage à bande étroite (fig. 66), le codage pouvant être une réunion multiplex de canaux.

9. Procédé d'exploitation du codage selon les revendications 1, 3 et 5, caractérisé en ce que le décodage de la durée de période ou de la position de phase s'effectue en ce qu'au début de la durée de demi-période ou de la durée de période, marqué par le passage par zéro, entrent en action des moyens qui produisent une tension en dents de scie et en ce qu'à la fin de la durée de demi-période ou de la durée de période, également marquée par un passage par zéro, entrent en action des moyens qui fixent la grandeur de la tension en dents de scie à cet instant, ou qui mémorisent la grandeur de la tension en dents de scie en particulier dans un condensateur (FET, C).

10. Procédé selon les revendications 1, 3 et 5, caractérisé en ce qu'une multiplication de l'information à coder par des durées de période ou des positions de phase s'effectue en ce que plusieurs courants alternatifs de codage sont prévus de manière que les moyens des organes convertisseurs (fig. 57, Z1, Z2) soient commandés avec des fréquences différentes (fig. 57, Jm1, Jm2) telles que les bandes de fréquences qui en résultent aient une distance facilement exploitable (fig. 58, Ab).

11. Procédé selon les revendications 1, 3 et 5, caractérisé en ce qu'un codage direct et une transmission de modulation pôles-amplitudes en modulation d'impulsions de durée s'effectue en ce que les grandeurs déterminant l'excursion de fréquence sont dimensionnées de manière qu'il s'établisse une position centrale pour la gamme de fréquences (fig. 33, 34, fig. 35, Nu).

12. Procédé selon les revendications 1, 3 et 5, caractérisé en ce que pour obtenir la liberté de courant continu, en particulier pour la transmission par câble, les moyens de conversion de l'information en durées de période sont conçus de manière que l'on obtienne une même amplitude pour la demi-onde positive et la demi-onde négative.

13. Procédé selon les revendications 1, 3 et 5, caractérisé en ce qu'il est prévu pour le codage la combinaison d'un codage numérique, analogique, à plusieurs niveaux avec les états caractéristiques amplitudes, positions de phase et différences de phase.

14. Dispositif pour la télévision couleur selon la revendication 7, caractérisé en ce que pour la télévision couleur il est ajouté dans l'ordre au mot de code de luminance (fig. 21a, 1-8) ou à l'élément de code numérique (fig. 50, 51, 52), l'information codée des autres canaux, suivant leur valeur (fig. 21, rt, bl.T + So) dans une disposition prédéterminée éventuellement en tenant compte d'une mémorisation d'émission et de réception.

15. Procédé selon les revendications 1 à 6, caractérisé en ce que pour accroître la sécurité de transmission les courants alternatifs de codage sont modulés en fréquence (fig. 64).

Fig.10

K1 —— a (0°)

K2 —— b (90°)

K3 —— c (90°)

K4 —— d (180°)

Fig.11

Fig.13

0 1 1 0    K1  a

0 1 0 1    K2  b

Fig.1.

a

K

Kv1

Kv2

1 0 1 1

1  1

0  1

b

Kv3   1

Kv4   1

Fig.31a

Inf

U  t1  t2

Fig.32a

PD1  PD2 ...   PDM

Fig.2

Fig. 6

Fig. 9

Fig. 8

Fig.3

a

TP1,5MHz

b

TP3,5MHz

c

TP5,5MHz

Fig.7

Fig.4

Fig.5

ÜW ── EST ── B ──── VE

Fig. 12

Fig. 12a

Fig. 14

Fig. 15

Fig. 16

Fig. 17

Fig.18

Fig.19

Fig.20

Fig.21

Fig.21b

Fig.21a

$$S1 = 1-1-0-1-0$$

Fig. 22

Fig. 23

Fig. 24

Fig. 24a

Fig. 29a

Fig. 29b

Fig. 26

Fig. 27

Fig. 25

Fig. 27a

Fig. 28

Fig. 28a

Fig. 30a

Fig. 30b

Fig. 31

PDM   Fig. 32

Fig. 33

Fig. 34

Fig. 35

Fig. 36

Fig. 37

PD_f | 1 | 2 | 3 | 4 | 5 | 6 |

Fig. 38

Fig. 65

B(y)  r  B(y)  bl  B(y) T+S

8   6   8   6   8   3   bit

Fig. 66

Fig. 40

Fig. 39

Fig. 41

Fig. 42

Fig. 43

Fig. 44

Fig. 45

Fig. 46

31

Fig. 47

Fig. 48

Fig. 49

Fig. 50

Fig. 51

Fig. 52

Fig. 53

Fig. 54

Fig. 55

Fig.56

Fig.58

Fig.57

Fig.59

Fig.60

Fig.61

Fig.62

Fig.63

Fig.64